(19) Europäisches Patentamt
European Patent Office
Office européen des brevets

(11) **EP 3 457 620 B1**

(12) **FASCICULE DE BREVET EUROPEEN**

(45) Date de publication et mention
de la délivrance du brevet:
**01.01.2020 Bulletin 2020/01**

(51) Int Cl.:
*H04L 9/00* (2006.01)       *G06F 21/54* (2013.01)

(21) Numéro de dépôt: **18193224.5**

(22) Date de dépôt: **07.09.2018**

(54) **PROCÉDÉ D'EXÉCUTION D'UN CODE BINAIRE D'UNE FONCTION SÉCURISÉE PAR UN MICROPROCESSEUR**

AUSFÜHRUNGSVERFAHREN EINES BINÄREN CODES EINER DURCH EINEN MIKROPROZESSOR GESICHERTEN FUNKTION

METHOD FOR EXECUTING A BINARY CODE OF A SECURE FUNCTION BY A MICROPROCESSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.09.2017 FR 1758506**

(43) Date de publication de la demande:
**20.03.2019 Bulletin 2019/12**

(73) Titulaire: **Commissariat à l'Énergie Atomique et aux Énergies Alternatives 75015 Paris (FR)**

(72) Inventeur: **SAVRY, Olivier 38360 SASSENAGE (FR)**

(74) Mandataire: **Colombo, Michel Innovation Competence Group 310, avenue Berthelot 69372 Lyon Cedex 08 (FR)**

(56) Documents cités:
**EP-A1- 1 783 648          EP-A2- 1 855 476
WO-A1-2012/010205          WO-A2-2007/010009
US-A- 5 689 727            US-A1- 2003 046 563
US-A1- 2009 235 090**

- **"Chapter 13: Key Management Techniques ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 543 - 590 , 1 octobre 1996 (1996-10-01), XP001525013, ISBN: 978-0-8493-8523-0 Extrait de l'Internet: URL:http://www.cacr.math.uwaterloo.ca/hac/**
- **"Chapter 12: Key Establishment Protocols ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 489 - 541 , 1 octobre 1996 (1996-10-01), XP001525012, ISBN: 978-0-8493-8523-0 Extrait de l'Internet: URL:http://www.cacr.math.uwaterloo.ca/hac/**

EP 3 457 620 B1

## Description

L'invention concerne un procédé d'exécution d'un code binaire d'une fonction sécurisée par un microprocesseur. L'invention concerne également :

- un code binaire d'une fonction sécurisée, un support d'enregistrement d'informations et un microprocesseur pour la mise en œuvre de ce procédé d'exécution, et
- un compilateur pour générer ce code binaire.

Pour obtenir des informations sur un code binaire ou provoquer un fonctionnement inattendu du code binaire, de nombreuses attaques sont possibles. Par exemple, des attaques connues sous le terme d'« injection de fautes » ou «fault attack» en anglais peuvent être mises en œuvre. Ces attaques consistent à perturber le fonctionnement du microprocesseur ou de la mémoire contenant le code binaire, par divers moyens physiques comme des modifications des tensions d'alimentation, des modifications du signal d'horloge, l'exposition du microprocesseur à des ondes électromagnétiques et autres.

À l'aide de telles attaques, un attaquant peut altérer l'intégrité des instructions machines ou des données pour, par exemple, retrouver une clé secrète d'un système cryptographique, contourner des mécanismes de sécurité tels que la vérification d'un code PIN lors d'une authentification ou simplement empêcher l'exécution d'une fonction essentielle pour la sécurité d'un système critique.

Ces attaques peuvent provoquer notamment trois types de fautes, dites fautes d'exécution, lors de l'exécution du code binaire :

> 1) une altération des instructions du code machine exécuté,
> 2) une altération des données stockées dans la mémoire principale ou dans des registres du microprocesseur, et
> 3) une altération du flot de contrôle du code machine.

Le flot de contrôle correspond au chemin d'exécution suivi lors de l'exécution du code machine. Le flot de contrôle est classiquement représenté sous la forme d'un graphe connu sous le terme de graphe de flot de contrôle ou « control flow graph » en anglais.

Le code binaire d'une fonction peut être instrumenté pour permettre la détection et le signalement des fautes d'exécution. Lorsque le code binaire d'une fonction est ainsi instrumenté, ce code binaire est qualifié de « code binaire d'une fonction sécurisée ». En effet, contrairement au code binaire d'une fonction non-sécurisée, ce code binaire est apte à permettre le signalement de fautes d'exécution typiquement rencontrées en cas d'attaques.

A ce sujet, de l'état de la technique est connu de EP1783648A1, US2009/235090A1, US5689727A1, WO2012/010205A1, EP1855476A2, WO2007/010009A2 et US2003/046563A1.

De l'état de la technique est également connu des chapitres 12 et 13 du livre suivant : Menezes et Al : « Handbook of applied cryptography », CRS Press, Boca Raton, 1/10/1996.

En particulier, EP1783648A1 enseigne d'ajouter à chaque instruction du code binaire une signature pour vérifier son intégrité lors de son chargement par le microprocesseur. US2009/235090A1 quant à lui enseigne de chiffrer les instructions enregistrées en mémoire et de les déchiffrer avant leur exécution.

L'objectif ici est de proposer un procédé d'exécution d'un code binaire d'une fonction sécurisée qui offre au moins l'une des possibilités suivantes :

- détecter une faute d'exécution si une instruction du code machine de la fonction sécurisée est altérée,
- détecter une faute d'exécution si le flot de contrôle est altéré,
- détecter une faute d'exécution en cas de dysfonctionnement d'une unité arithmétique et logique lors de l'exécution d'une instruction par cette unité,
- détecter une faute d'exécution si les données traitées lors de l'exécution de la fonction sécurisée sont altérées.

En particulier, les procédés connus ne sont pas robustes vis-à-vis des attaques qui peuvent provoquer, par exemple par injection de fautes, des modifications des instructions déjà stockées dans la file d'instructions du microprocesseur ou des données déjà stockées dans les registres du microprocesseur.

L'invention a donc pour objet un tel procédé d'exécution d'un code binaire d'une fonction sécurisée par un microprocesseur conforme à la revendication 1.

Les modes de réalisation de ce procédé d'exécution peuvent comporter une ou plusieurs des caractéristiques des revendications dépendantes.

L'invention a également pour objet un code binaire d'une fonction sécurisée exécutable par un microprocesseur pour la mise en œuvre du procédé revendiqué.

L'invention a également pour objet un support d'enregistrement d'informations lisible par un microprocesseur, ce support d'enregistrement d'informations contenant le code binaire revendiqué.

L'invention a également pour objet un microprocesseur pour la mise en œuvre du procédé revendiqué.

Enfin, l'invention a également pour objet un compilateur apte à transformer automatiquement un code source d'une fonction sécurisée en un code binaire tel que revendiqué.

L'invention sera mieux comprise à la lecture de la description qui va suivre, donnée uniquement à titre d'exemple non limitatif et faite en se référant aux dessins sur lesquels :

- la figure 1 est une illustration schématique de l'architecture d'un appareil électronique apte à exécuter un code binaire d'une fonction sécurisée ;
- la figure 2 est une illustration schématique de la structure d'une ligne de code codant une instruction du code binaire exécuté par l'appareil de la figure 1,
- les figures 3 à 5 sont des illustrations schématiques de différentes portions du code binaire de la fonction sécurisée susceptible d'être exécutée par l'appareil de la figure 1 ;
- la figure 6 est un organigramme d'un procédé d'exécution du code binaire de la fonction sécurisée ;
- la figure 7 est une illustration schématique de la structure d'un registre du microprocesseur de l'appareil de la figure 1,
- la figure 8 est un organigramme d'un détail d'une étape du procédé de la figure 6 mise en œuvre pour sécuriser le fonctionnement d'une unité arithmétique et logique du microprocesseur de l'appareil de la figure 1,
- la figure 9 est une illustration schématique de la structure d'une ligne de code codant une donnée traitée lors de l'exécution du code binaire par l'appareil de la figure 1,
- la figure 10 est un organigramme d'un détail d'une étape du procédé de la figure 6 mise en œuvre pour sécuriser les données traitées lors de l'exécution du code binaire par l'appareil de la figure 1
- la figure 11 est une illustration schématique d'un compilateur apte à générer le code machine exécuté par l'appareil de la figure 1.

Chapitre I : Conventions, notations et définitions :

Dans les figures, les mêmes références sont utilisées pour désigner les mêmes éléments. Dans la suite de cette description, les caractéristiques et fonctions bien connues de l'homme du métier ne sont pas décrites en détails.

Dans cette description, les définitions suivantes sont adoptées.

Un « programme » désigne un ensemble d'une ou de plusieurs fonctions prédéterminées que l'on souhaite faire exécuter par un microprocesseur.

Un « code source » est une représentation du programme dans un langage informatique, n'étant pas directement exécutable par un microprocesseur et étant destiné à être transformé par un compilateur en un code machine directement exécutable par le microprocesseur.

Un programme ou un code est dit être « directement exécutable » lorsqu'il est apte à être exécuté par un microprocesseur sans que ce microprocesseur n'ait besoin au préalable de le compiler au moyen d'un compilateur ou de l'interpréter au moyen d'un interpréteur.

Une « instruction » désigne une instruction machine exécutable par un microprocesseur. Une telle instruction est constituée :

- d'un opcode, ou code d'opération, codant la nature de l'opération à exécuter, et
- d'un ou plusieurs opérandes définissant la ou les valeurs des paramètres de cette opération.

Un « code machine » est un ensemble d'instructions machines. Il s'agit typiquement d'un fichier contenant une succession de bits portant la valeur « 0 » ou « 1 », ces bits codant les instructions à exécuter par le microprocesseur. Le code machine est directement exécutable par le microprocesseur, c'est-à-dire sans nécessiter une compilation ou une interprétation préalable.

Un « code binaire » est un fichier contenant une succession de bits portant la valeur « 0 » ou « 1 ». Ces bits codent des données et des instructions à exécuter par le microprocesseur. Ainsi, le code binaire comprend au moins un code machine et en plus, généralement, des données numériques traitées par ce code machine.

Un « flot d'instructions » est une succession d'instructions classées les unes après les autres et qui forme, dans le code machine, une suite ordonnée de bits. Le flot d'instructions débute par une instruction initiale et se termine par une instruction finale. Par rapport à une instruction donnée du flot d'instructions, les instructions situées du côté de l'instruction initiale sont appelées « instructions précédentes » et les instructions situées du côté de l'instruction finale, sont appelées « instructions suivantes ». Dans ce texte, ce flot d'instructions en mémoire est découpé en une succession de blocs de base immédiatement consécutifs ou séparés par des blocs de données.

Dans ce texte, un « bloc de base » est un groupe d'instructions successives du flot d'instructions qui débute à une adresse de branchement et qui se termine par une seule instruction de branchement explicite ou implicite. Une instruction de branchement explicite se caractérise par la présence explicite d'un opcode dans le code machine qui code l'instruction de branchement. Une instruction de branchement implicite correspond au cas où l'exécution d'un bloc de base précédent se poursuit systématiquement par l'exécution d'un bloc de base suivant situé, dans le code machine, immédiatement après le bloc de base précédent. Dans ce cas, étant donné qu'en absence d'instruction de branchement explicite, les instructions du code machine sont exécutées dans l'ordre les unes après les autres, il n'est pas nécessaire d'introduire à la fin du bloc de base précédent une instruction de branchement explicite vers le bloc de base suivant. Dans cette description, on dit que dans ce cas, le bloc de base précédent se termine par une instruction de branchement implicite car elle n'est pas explicitement codée dans le code machine. Dans ce cas, le bloc de base précédent se termine juste avant l'adresse de branchement du bloc de base suivant. Dans cette demande, l'expression « instruction de branchement » désigne une instruction de branchement explicite à défaut de mention contraire. Ainsi, l'exécution d'un bloc de base débute systématiquement par l'exécution de l'instruction située à son adresse de branchement et se termine systématiquement par l'exécution de l'instruction de branchement qui termine ce bloc de base. Un bloc de base ne comporte pas d'autres instructions de branchement que celle située à la fin de ce bloc de base. Ainsi, les instructions d'un bloc de base sont systématiquement toutes lues par le microprocesseur les unes après les autres dans l'ordre où elles sont présentes dans ce bloc de base. L'instruction de branchement peut diriger, lorsqu'elle est exécutée, le flot de contrôle systématiquement vers la même adresse de branchement ou, en alternance, vers différentes adresses de branchement. Ce dernier cas de figure se rencontre, par exemple, lorsqu'à la fin du bloc de base exécuté, le flot de contrôle peut se poursuivre vers un premier et, en alternance, vers un deuxième bloc de base.

Une « instruction de branchement» est une instruction qui, lorsqu'elle est exécutée par le microprocesseur, déclenche un saut vers l'adresse de branchement d'un autre bloc de base. Cette instruction de branchement comporte donc au moins l'adresse de branchement de cet autre bloc de base. Typiquement, à cet effet, cette instruction remplace la valeur actuelle du compteur ordinal par la valeur de l'adresse de branchement. On rappelle que le compteur ordinal contient l'adresse de la prochaine instruction à exécuter par le microprocesseur. En absence d'instruction de branchement, à chaque fois qu'une instruction est exécutée, le compteur ordinal est incrémenté de la taille de l'instruction actuellement exécutée. En absence d'instruction de branchement, les instructions sont systématiquement exécutées séquentiellement les unes après les autres dans l'ordre où elles sont enregistrées dans une mémoire principale. L'instruction de branchement peut être inconditionnelle, c'est à dire que le saut vers l'adresse de branchement est systématiquement réalisé dès que cette instruction est exécutée. Une instruction de branchement inconditionnel est par exemple l'instruction « JMP » en langage assembleur pour les microprocesseurs de la série x86. L'instruction de branchement peut aussi être conditionnelle, c'est-à-dire que le saut vers l'adresse de branchement est déclenché lors de son exécution uniquement si une condition particulière est vérifiée. Par exemple, une instruction de branchement conditionnel est une instruction « JE », « JA » ou « JNE » en assembleur. L'instruction de branchement peut aussi bien être un appel à une fonction. Dans ce texte, le terme « instruction de branchement » désigne aussi bien les instructions de branchement direct qu'indirect. Une instruction de branchement direct est une instruction de branchement qui contient directement la valeur numérique de l'adresse de branchement. Une instruction de branchement indirect, est une instruction de branchement vers une adresse de branchement contenue dans une mémoire ou un registre du microprocesseur. Ainsi, contrairement à une instruction de branchement direct, une instruction de branchement indirect ne contient pas directement la valeur numérique de l'adresse de branchement.

Une « adresse de branchement » est l'adresse dans la mémoire principale à laquelle se trouve la première instruction exécutée d'un bloc de base. Par la suite, on parle d'adresse de branchement même pour les blocs de base dont la première instruction est exécutée suite à l'exécution d'une instruction de branchement implicite.

On parle d'exécution d'une fonction pour désigner l'exécution des instructions réalisant cette fonction.

Dans un souci de simplification, dans cette description et dans les figures, les instructions ne sont pas représentées sous forme binaire, mais plutôt sous une forme symbolique exprimée dans un langage évolué de plus haut niveau.

Chapitre II : Architecture de l'appareil :

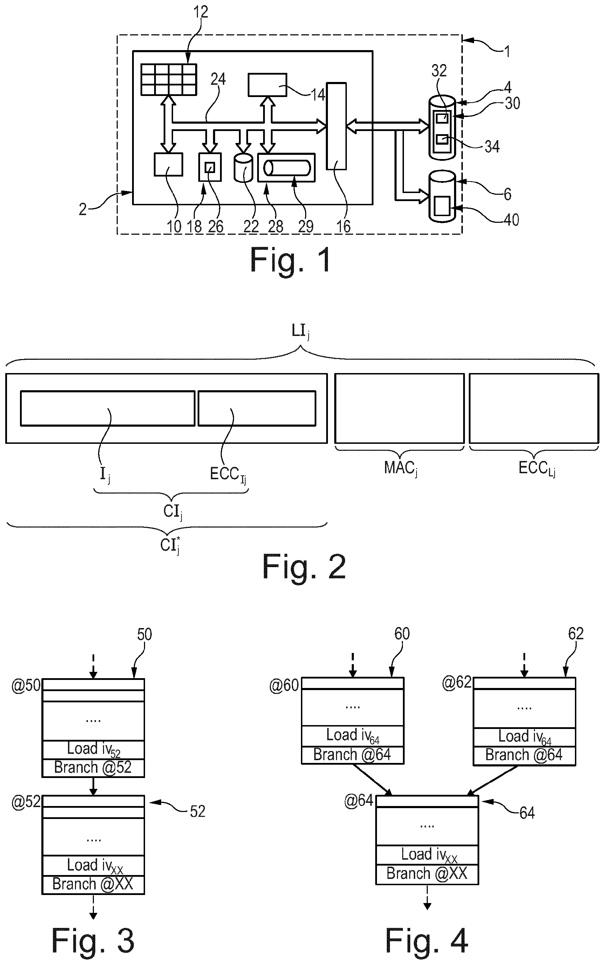

La figure 1 représente un appareil électronique 1 comportant un microprocesseur 2, une mémoire principale 4 et un support 6 de stockage de masse. Par exemple, l'appareil 1 est un ordinateur, un smartphone, une tablette électronique ou similaire.

Le microprocesseur 2 comporte ici :

- une unité arithmétique et logique 10 ;
- un ensemble 12 de registres ;
- un module de commande 14 ;
- une interface 16 d'entrée/sortie de données,
- un chargeur 18 d'instructions comportant un compteur ordinal 26,
- une file 22 d'instructions à exécuter, et
- un module matériel 28 de sécurisation.

La mémoire 4 est configurée pour stocker des instructions d'un code binaire 30 d'un programme devant être exécuté par le microprocesseur 2. La mémoire 4 est une mémoire à accès aléatoire. Typiquement, la mémoire 4 est une mémoire volatile. La mémoire 4 peut être une mémoire externe au microprocesseur 2 comme représenté sur la figure 1. Dans ce cas, la mémoire 4 est réalisée sur un substrat mécaniquement séparé du substrat sur lequel sont réalisés les différents éléments du microprocesseur 2 comme l'unité 10.

Ici, la mémoire 4 est divisée en mots-machines successifs de longueur fixe. Chaque mot-machine peut être transféré en un seul cycle d'horloge depuis la mémoire 4 jusque dans un registre du microprocesseur. A cet effet, la taille $N_{MM}$ d'un mot-machine est égale au nombre maximum de bits qui peuvent être transférés simultanément de la mémoire 4 vers un registre de l'ensemble 12. Ici, la taille $N_{MM}$ est strictement supérieure $N_{inst}$ bits, où $N_{inst}$ bits est le nombre de bits des instructions du jeu d'instructions du microprocesseur 2. Typiquement, $N_{inst}$ est un entier supérieur ou égale à 8, 16, 32 ou 64. Dans cet exemple, $N_{inst}$ est égal à 32 et la taille $N_{MM}$ est égale à 128 bits.

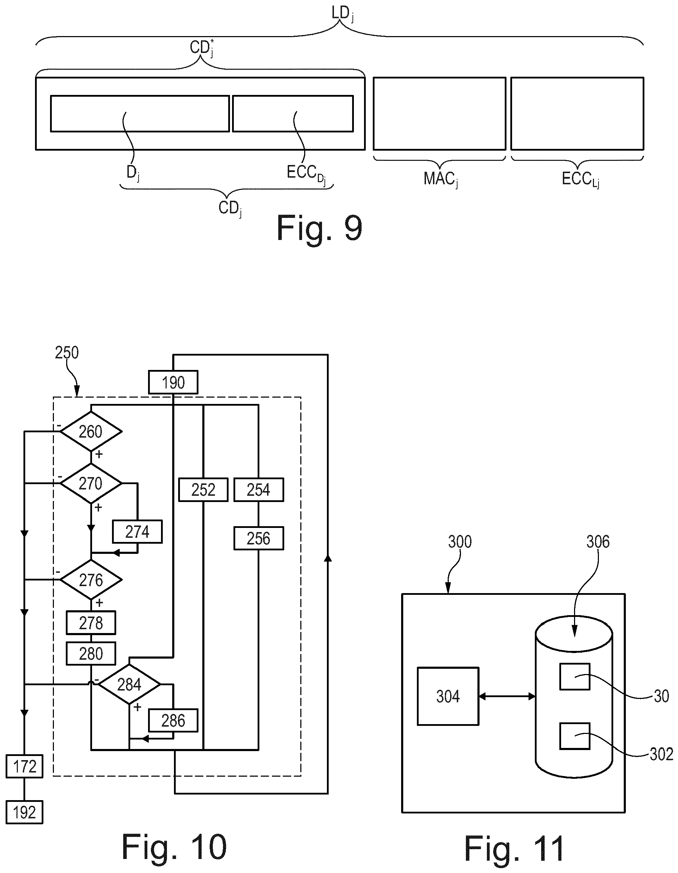

A titre d'illustration, le code binaire 30 comporte notamment un code machine 32 d'une fonction sécurisée et un bloc 34 de données nécessaires au déchiffrement du code binaire 30. Chaque fonction sécurisée correspond à un ensemble de plusieurs lignes de code, par exemple plusieurs centaines ou milliers de lignes de code, enregistrées à des adresses successives dans la mémoire 4. Ici, chaque ligne de code correspond à un mot-machine. Ainsi, une ligne de code est chargée dans un registre du microprocesseur 12 en une seule opération de lecture. De même, une ligne de code est écrite dans la mémoire 4 par le microprocesseur 2 en une seule opération d'écriture. Chaque ligne de code code soit une seule instruction soit une seule donnée. La structure d'une ligne de code des fonctions sécurisées est décrite en détail en référence aux figures 2 et 9.

Le bloc 34 est typiquement situé dans une plage d'adresses prédéterminée au début du code binaire 30. Ainsi, l'exécution du code binaire 30 débute par le chargement et le traitement des données du bloc 34. Ici, le bloc 34 comporte notamment :

- un cryptogramme ka* obtenu en chiffrant une clé ka à l'aide d'une clé publique $pk_{CPU}$ du microprocesseur 2,
- le cryptogramme $iv_{ini}$* obtenu en chiffrant, à l'aide de la clé publique $pk_{CPU}$, un vecteur d'initialisation $iv_{ini}$ utilisé pour chiffrer le premier bloc de base par lequel l'exécution du code machine 32 débute systématiquement,
- une signature $S_{ka*}$ du cryptogramme ka* obtenue en chiffrant une étiquette, construite à partir du cryptogramme ka*, à l'aide d'une clé privée $sk_{aut}$ d'un auteur du code binaire 30,
- un certificat cryptographique $C_{aut}$ qui permet de vérifier la signature $S_{ka*}$, ce certificat étant signé à l'aide d'une clé privée $sk_{os}$ d'un système d'exploitation et contenant une clé publique $pk_{aut}$ qui permet de vérifier l'authenticité de la signature $S_{ka*}$.

L'étiquette du cryptogramme ka* est typiquement obtenue en appliquant une fonction de hachage prédéterminée (« hash function » en anglais) sur le cryptogramme ka*. Une telle étiquette est plus connue sous le terme anglais de « digest ».

A titre d'illustration, le microprocesseur 2 est conforme à l'architecture RISC (« Reduced Instructions Set Computer »).

Ici, l'unité 10 est une unité arithmétique et logique de $N_{inst}$ bits.

Le chargeur 18 charge dans la file 22 la prochaine instruction à exécuter par l'unité 10 à partir de la mémoire 4. Plus précisément, le chargeur 18 charge l'instruction sur laquelle pointe le compteur ordinal 26. Dans ce mode de réalisation, le chargeur 18 charge dans la file 22 systématiquement et à chaque fois une instruction $I_j$ et un code correcteur d'erreur $ECC_{Ij}$. Le code $ECC_{Ij}$ est codé sur $N_{ECCIj}$ bits, où $N_{ECCIj}$ est un nombre entier souvent strictement inférieur à $N_{inst}$ et, généralement, supérieur à 1 ou 2 ou 3 bits. A cet effet, la file 22 comprend une succession de plusieurs registres chacun de largeur égale à $N_{ECCIj}+N_{inst}$ bits.

L'unité 10 est notamment configurée pour exécuter les unes après les autres les instructions chargées dans la file 22. Les instructions chargées dans la file 22 sont généralement systématiquement exécutées dans l'ordre où ces instructions ont été enregistrées dans cette file 22. L'unité 10 est aussi capable d'enregistrer le résultat de ces instructions exécutées dans un ou plusieurs des registres de l'ensemble 12.

Dans cette description, on utilisera comme synonymes « exécution par le microprocesseur 2 » et « exécution par l'unité 10 ».

Le module 14 est configuré pour déplacer des données entre l'ensemble 12 de registres et l'interface 16. L'interface 16 est notamment apte à acquérir des données et des instructions, par exemple, depuis la mémoire 4 et/ou le support 6 extérieurs au microprocesseur 2.

Le module 28 est capable d'exécuter automatiquement les différentes opérations décrites en détails dans les chapitres suivants pour sécuriser l'exécution des fonctions sécurisées. Le module 28 fonctionne indépendamment et sans utiliser l'unité 10. Ainsi, il est capable de traiter les lignes de code avant et/ou après que celles-ci soient traitées par l'unité 10. A cet effet, il comporte notamment une mémoire non-volatile sécurisée 29. Aucun accès à cette mémoire 29 sans passer par l'intermédiaire du module 28 n'est prévu. Dans ce mode de réalisation, le module 28 est pré-programmé, par exemple lors de sa conception, pour exécuter des opérations telles que les opérations suivantes :

- vérifier un code correcteur d'erreur et corriger l'erreur à partir de ce code si nécessaire,
- vérifier un code détecteur d'erreur,
- construire un code détecteur ou correcteur d'erreur à partir d'une donnée,
- vérifier l'intégrité et l'authenticité d'une donnée à partir d'un code d'authentification de message plus connu sous l'acronyme MAC (« Message Authentification Code »),
- chiffrer une donnée pour obtenir un cryptogramme,
- déchiffrer un cryptogramme pour obtenir une donnée en claire,
- vérifier une signature cryptographique et/ou un certificat cryptographique,
- exécuter une fonction préprogrammée $F_{iv}$.

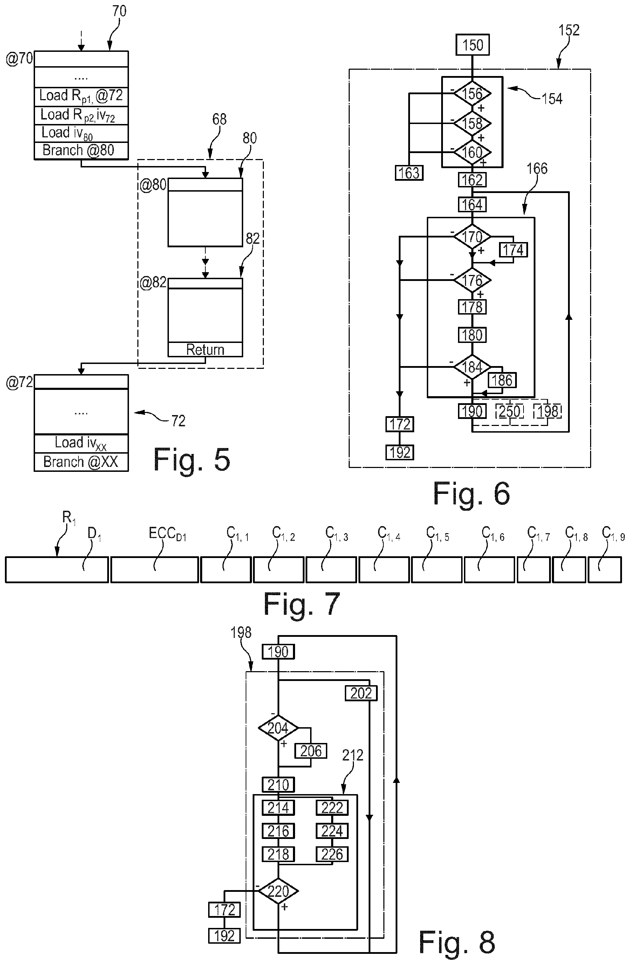

La mémoire 29 est utilisée pour stocker les informations secrètes nécessaires à la mise en œuvre du procédé de la figure 6. Ici, elle comporte donc notamment des informations secrètes pré-enregistrées avant le début de l'exécution du code binaire 30. En particulier, elle comporte les informations pré-enregistrées suivantes :

- une clé secrète k' utilisée pour la vérifications des codes d'authentification de message,
- un certificat cryptographique $C_{os}$ émis par une autorité de confiance et comportant une clé publique $pk_{os}$ de cette autorité de confiance,
- un certificat cryptographique $C_{CPU}$ qui est signé par l'autorité de confiance à l'aide d'une clé privée $sk_{os}$ qui permet de chiffrer des données qui doivent être déchiffrées à l'aide de la clé publique $pk_{os}$, ce certificat contenant une clé publique $pk_{CPU}$,
- un clé privée secrète $sk_{CPU}$ qui permet de déchiffrer les données qui ont été chiffrées à l'aide de la clé publique $pk_{CPU}$.

Dans cet exemple de réalisation, l'ensemble 12 comporte des registres généraux utilisables pour stocker tout type de données. La taille de chacun de ces registres est, par exemple, égale à $N_{MM}$.

Un bus d'échange de données 24 qui relie les différents composants du microprocesseur 2 entre eux est représenté sur la figure 1 pour indiquer que les différents composants du microprocesseur peuvent échanger des données entre eux.

Le support 6 est typiquement une mémoire non volatile. Par exemple, il s'agit d'une mémoire du type EEPROM ou Flash. Il contient ici une copie 40 de sauvegarde du code binaire 30. Typiquement, c'est cette copie 40 qui est automatiquement recopiée dans la mémoire 4 pour restaurer le code 30, par exemple, après une coupure de courant ou similaire ou juste avant que débute l'exécution du code 30.

CHAPITRE III : SÉCURISATION DU CODE MACHINE :

Ici, la structure du code machine de la fonction sécurisée est décrite dans le cas particulier du code machine 32. Toutefois, ce qui est décrit dans ce cas particulier se transpose sans difficulté à tout code machine d'une fonction sécurisée.

Le code machine 32 comporte une succession de lignes de code $LI_j$ enregistrées les unes après les autres dans la mémoire 4. Par la suite, dans ce chapitre, l'indice j est utilisé pour identifier la ligne de code $LI_j$ parmi les autres lignes de code du code machine 32. De plus, l'indice j est aussi utilisé comme un numéro d'ordre indiquant dans quel ordre les lignes $LI_j$ sont classées. Ainsi, on note $LI_{j+1}$ la ligne de code située immédiatement après la ligne $LI_j$. Chaque ligne de code $LI_j$ code une instruction du jeu d'instructions du microprocesseur 2 apte à être exécutée après avoir été déchiffrée et décodée par l'unité 10 de ce microprocesseur.

La structure de toutes les lignes $LI_j$ sont identiques. Elle est représentée en détail sur la figure 2 dans le cas particulier de la ligne $LI_j$. La ligne $LI_j$ comporte un cryptogramme $CI_j{}^*$, un code $MAC_j$, et un code $ECC_{Lj}$.

Le cryptogramme $CI_j{}^*$ est obtenu en chiffrant une concaténation $CI_j$ à l'aide de la clé secrète ka et d'un vecteur d'initialisation $iv_k$. Plus précisément, le cryptogramme $CI_j{}^*$ est obtenu à l'aide de la relation suivante : $CI_j{}^* = f_{ka}(CI_j ; iv_k)$, où $f_{ka}$ est une fonction de chiffrement correspondant à une fonction de déchiffrement $f_{ka}{}^{-1}$ préprogrammée dans le module 28. Typiquement, la fonction $f_{ka}$ est une fonction de chiffrement symétrique. Dès lors, la clé ka permettant de déchiffrer le cryptogramme $CI_j{}^*$ est préenregistrée dans la mémoire 29 afin de permettre au module 28 de déchiffrer ce cryptogramme $CI_j{}^*$. Comme expliqué plus loin, le vecteur d'initialisation ivk est quant à lui contenu dans une ligne de code précédente du code machine 32.

La concaténation $CI_j$ est ici la concaténation d'une instruction $I_j$ à exécuter par le microprocesseur 2 et d'un code $ECC_{Ij}$. Le code $ECC_{Ij}$ permet de détecter une erreur dans l'instruction $I_j$ et de corriger cette erreur. Par exemple, le code $ECC_{Ij}$ peut être le code connu sous l'acronyme BCH (Bose, Ray-Chaudhuri, Hocquenghem) qui présente l'avantage d'être particulièrement facile à mettre en œuvre. Toutefois, tout autre code correcteur d'erreur connu peut être mis en œuvre. La taille du code $ECC_{Ij}$ est supérieure ou égale à 1 ou 2 ou 3 bits et, généralement, inférieure à $N_{inst}$. La taille du code $ECC_{Ij}$ est déterminée en fonction de la robustesse souhaitée. Plus on veut être capable de corriger un nombre de bits erronés important dans l'instruction $I_j$, plus la taille du code $ECC_{Ij}$ sera grande.

Le code $MAC_j$ est un code permettant de vérifier l'intégrité et l'authenticité du cryptogramme $CI_j{}^*$. Ce code est communément appelé « code d'authentification de message » et connu sous l'acronyme MAC (« Message Authentification Code »). Un tel code $MAC_j$ est obtenu en construisant une étiquette à partir du cryptogramme $CI_j{}^*$ qui comporte normalement moins de bits que le cryptogramme $Ci_j{}^*$. Cette étiquette est construite à l'aide d'une fonction prédéterminée telle qu'une fonction de hachage. Ensuite, cette étiquette est chiffrée avec la clé secrète k' connue seulement de l'auteur du code binaire 30 et du microprocesseur 2. Ici, la clé k' est préenregistrée dans la mémoire 29.

À titre d'exemple, pour générer le cryptogramme $CI_j{}^*$ et le code $MAC_j$, un algorithme de chiffrement par flot authentifié est utilisé. Cet algorithme de chiffrement par flot authentifié peut être choisi parmi les différents candidats à la compétition CAESAR (« Compétition for Authentificated Encryption : Security, Applicability, and Robustness ») comme par exemple l'un des algorithmes désignés par les noms suivants : « ACORN », « ASCON », « SILC », « CLOC », « JAMBU », « KETJE ».

Le code $ECC_{Lj}$ est un code correcteur d'erreur qui permet de détecter et de corriger une erreur dans le cryptogramme $CI_j{}^*$ et le code $MAC_j$. Il est par exemple construit comme décrit dans le cas du code $ECC_{Ij}$.

Par la suite, on note $@_j$ l'adresse dans la mémoire 4 à laquelle est enregistrée la ligne $LI_j$.

Le code machine 32 se compose d'une succession de blocs de base qui doivent être exécutés les uns après les autres. Ici, chaque bloc de base se compose d'une succession de lignes de code qui chacune comporte le cryptogramme $CI_j^*$ de l'instruction $I_j$ à exécuter.

La figure 3 représente un premier agencement de deux blocs de base 50 et 52 du code machine 32. Dans ce premier agencement, les blocs de base 50 et 52 sont systématiquement exécutés l'un après l'autre. Dans l'ordre d'exécution, le bloc de base 50 précède le bloc de base 52. Dans cette figure et les figures suivantes :

- l'ordre d'exécution des blocs de base est représenté par une flèche qui pointe du bloc de base précédent vers le bloc de base suivant,
- une flèche en pointillés qui pointe sur un bloc de base représenté indique que le ou les blocs de base qui précèdent ce bloc de base n'ont pas été représentés pour simplifier la figure,
- une flèche en pointillés qui pointe dans le vide depuis un bloc de base représenté indique que le ou les blocs de base suivants ce bloc de base représenté n'ont pas été représentés pour simplifier la figure,
- le symbole « ... » à l'intérieur d'un bloc de base indique que toutes les lignes de code de ce bloc de base n'ont pas été représentées.

Chaque bloc de base débute par une adresse de branchement et se termine par une ligne de code qui contient le cryptogramme d'une instruction de branchement. Sur la figure 2, les symboles « @50 » et « @52 » à côté de la première ligne de code de chaque bloc de base désignent les adresses de branchement, respectivement, des blocs de base 50 et 52. Le symbole « @XX » désigne l'adresse de branchement d'un autre bloc de base non représenté sur la figure 2.

Le symbole « Load $iv_{XX}$» indiqué dans l'avant dernière ligne de code du bloc de base indique que cette ligne de code comporte le cryptogramme d'une instruction qui, lorsqu'elle est exécutée par le microprocesseur 2, provoque le chargement d'un nouveau vecteur d'initialisation $iv_{XX}$ dans la mémoire 29. Ainsi, le symbole « Load $iv_{52}$» indique que le vecteur d'initialisation $iv_{52}$ est chargé dans la mémoire 29 avant que débute l'exécution du bloc de base 52.

Le symbole « Branch @XX» indiqué à l'intérieur de la dernière ligne de code du bloc de base indique que cette dernière ligne comporte le cryptogramme d'une instruction qui, lorsqu'elle est exécutée par le microprocesseur 2, provoque un branchement inconditionnel vers l'adresse de branchement @XX.

Ici, le même vecteur d'initialisation $iv_k$ est utilisé pour déchiffrer tous les cryptogrammes $CI_j^*$ de toutes les lignes de code du même bloc de base $BB_k$. L'indice k identifie sans ambiguïté le bloc de base BBk parmi l'ensemble des blocs de base du code machine 32. Dans les figures et dans la description, le symbole $iv_k$ est par la suite utilisé pour désigner de façon générale le vecteur d'initialisation à utiliser pour déchiffrer le bloc de base $BB_k$. De plus, dans les cas simples comme celui représenté sur la figure 3 où deux blocs de base se suivent dans l'ordre d'exécution du code machine 32, l'indice k est aussi utilisé pour indiquer l'ordre dans lequel ces blocs de base sont exécutés. Par exemple, la notation $BB_{k-1}$ est, dans ces cas simples, utilisée pour désigner le bloc de base systématiquement exécuté immédiatement avant le bloc de base BBk.

Ici, le vecteur d'initialisation $iv_k$ est unique pour chaque bloc de base BBk. Par « unique pour chaque bloc de base», on désigne le fait que la probabilité que deux blocs de base différent du code machine 32 soient chiffrés avec le même vecteur d'initialisation $iv_k$ est inférieure à une chance sur 100 ou sur 1000. En particulier, l'expression « unique pour chaque bloc de base» couvre donc le cas où les vecteurs d'initialisation $iv_k$ de tous les blocs de base sont systématiquement différents les uns des autres. Par exemple, dans un mode de réalisation simple, lors de la génération du code 32, les vecteurs d'initialisation $iv_k$ de chaque bloc de base sont tirées de façon aléatoire ou pseudo-aléatoire dans l'ensemble $\{1 ; ...; 2^{Ninst}\}$.

Comme représenté sur la figure 3, dans le code 32, le vecteur d'initialisation $iv_k$ est chargé dans la mémoire 29 uniquement lors de l'exécution d'un bloc de base précédent le bloc de base $BB_k$. Sur la figure 3, le vecteur d'initialisation $iv_{52}$ nécessaire pour déchiffrer le bloc 52 est chargé lors de l'exécution du bloc 50.

La figure 4 représente un autre agencement possible de plusieurs blocs de base du code 32 dans le cas particulier de deux blocs de base précédents 60 et 62 et d'un bloc de base suivant 64. Ici, les blocs 60 et 64 sont, par exemple, identiques, respectivement, aux blocs 50 et 52 sauf que le vecteur d'initialisation du bloc 64 est noté «$iv_{64}$». Le bloc 62 est construit comme le bloc 60 et, en particulier, il se termine par deux lignes de code qui codent les mêmes instructions que celles codées dans les deux dernières lignes du bloc 60. Toutefois, même si ces deux dernières lignes codent les mêmes instructions, les cryptogrammes de ces instructions sont différents parce que le bloc 62 est chiffré en utilisant un vecteur d'initialisation $iv_{62}$ différent du vecteur $iv_{60}$ utilisé pour chiffrer le bloc 60. Les autres lignes de code du bloc 62 sont différentes de celles du bloc 60.

La figure 5 représente une partie de l'architecture du code machine 32 lorsqu'un bloc de base se termine par un appel à un code machine 68 d'une sous-fonction sécurisée. Le code machine 68 est agencé comme précédemment décrit pour le code machine 32. Il se compose donc d'une succession de blocs de base. Pour simplifier la figure 5, seul le premier bloc de base 80 et le dernier bloc de base 82 de ce code machine 68 ont été représentés.

Le code machine 68 peut être appelé à partir de différents blocs de base du code machine 32 et, lorsque l'exécution du code machine 68 est terminée, le flot d'instructions peut retourner vers différents blocs de base du code machine 32. Ainsi, le bloc de base qui doit être exécuté après le bloc de base 82 dépend du bloc de base qui a appelé le code machine 68. Par conséquent, contrairement à ce qui a été décrit en référence aux figures 3 et 4, le bloc de base 80 ne se termine pas par une ligne de code qui code une instruction de branchement systématiquement vers la même adresse mais par une ligne de code qui code une instruction « Return ». Par conséquent, sur la figure 5, le symbole « Return » est utilisé pour identifier la dernière ligne du bloc 82.

Contrairement à l'instruction « Branch » précédemment décrite, l'instruction « Return » ne comporte pas explicitement l'adresse du prochain bloc de base à exécuter. L'instruction « Return » n'est pas non plus précédée d'une instruction de chargement d'un vecteur d'initialisation à utiliser pour déchiffrer le prochain bloc de base à exécuter.

Ici, lorsque l'instruction « Return » est exécutée par le microprocesseur 2, elle provoque :

- le chargement d'un nouveau vecteur d'initialisation contenu dans un registre $R_{p2}$ du microprocesseur, puis
- un saut inconditionnel vers une adresse contenue dans un registre $R_{p1}$ du microprocesseur 2.

Ces registres $R_{p1}$ et $R_{p2}$ sont chargés avec les valeurs adéquates lors de l'exécution du bloc de base à partir duquel le code machine 68 est appelé. Par exemple, sur la figure 5, le code machine 68 est appelé à partir d'un bloc de base 70 et, après l'exécution du code machine 68, l'exécution du code machine 32 doit se poursuivre par l'exécution d'un bloc de base 72. Le bloc de base 70 se termine par deux lignes codant respectivement, le chargement du vecteur d'initialisation $iv_{80}$ dans la mémoire 29 et un saut inconditionnel vers l'adresse @80 du bloc de base 80 du code machine 68.

De plus, avant ces lignes, le bloc 70 comporte aussi :

- une ligne qui code une instruction de chargement dans le registre $R_{p1}$ de l'adresse @72 du bloc de base 72, et
- une ligne qui code une instruction de chargement dans le registre $R_{p2}$ du vecteur d'initialisation $iv_{72}$ nécessaire pour déchiffrer le bloc de base 72.

Sur la figure 5, ces lignes sont désignées par les symboles, respectivement « Load $R_{p1}$, @72 » et « Load $R_{p2}$, $iv_{72}$ ».

Ainsi, lors de l'exécution de l'instruction « Return », le prochain bloc de base exécuté sera le bloc de base 72 et le vecteur d'initialisation utilisé pour le déchiffrer sera le vecteur $iv_{72}$ chargé dans le registre $R_{p2}$.

De préférence, les registres $R_{p1}$ et $R_{p2}$ sont des registres d'une pile d'appel de manière à permettre des appels à des sous-fonctions à partir des blocs de base d'autres sous-fonctions.

La figure 6 représente un procédé d'exécution du code binaire 30 par le microprocesseur 2.

Le procédé débute par une étape 150 de fourniture du code binaire 30 dans la mémoire 4. Pour cela, par exemple, le microprocesseur 2 recopie la copie 40 à l'intérieur de la mémoire 4 pour obtenir le code binaire 30 enregistré dans la mémoire 4.

Ensuite, lors d'une phase 152, le microprocesseur 2 exécute le code binaire 30 et, en particulier, le code machine 32.

L'exécution du code binaire 30 commence par une étape 154 d'authentification de l'auteur de ce code binaire. Lors de cette étape, le module 28 réalise successivement les opérations suivantes :

- lors d'une opération 156, le module 28 vérifie l'authenticité du certificat $C_{CPU}$ à l'aide de la clé publique $pk_{OS}$ contenue dans le certificat $C_{OS}$.
- lors d'une opération 158, le module 28 charge le certificat $C_{AUT}$ à partir du bloc 34 puis vérifie son authenticité à l'aide de la clé publique $pk_{OS}$ contenue dans le certificat Cos.
- lors d'une opération 160, le module 28 charge la signature $S_{ka*}$ à partir du bloc 34 et vérifie son authenticité à l'aide de la clé $pk_{AUT}$ contenue dans le certificat $C_{AUT}$.

Si toutes les opérations de vérification 156, 158 et 160 ont été réussies avec succès, alors le code binaire est correctement authentifié et le procédé se poursuit par une étape 162. À l'inverse, si l'une des opérations 156, 158 ou 160 n'a pas été réussie avec succès, le module 28 considère alors que l'authentification de l'auteur du code binaire 30 a échoué et le procédé se poursuit par une étape 163. Lors de l'étape 163, l'exécution du code binaire 30 est arrêtée.

Lors de l'étape 162, le module 28 charge les cryptogrammes ka* et $iv_{ini}*$ contenus dans le bloc 34 et les déchiffre à l'aide de la clé $sk_{CPU}$ contenue dans la mémoire 29. À l'issue de l'étape 162, la clé ka et le vecteur d'initialisation $iv_{ini}$ utilisé pour déchiffrer le premier bloc de base du code machine 32 sont contenus dans la mémoire 29.

Après l'étape 162, le microprocesseur 2 exécute, les uns après les autres, les blocs de base en commençant par le premier bloc de base $BB_{ini}$ du code machine 32.

L'exécution de chaque bloc de base consiste à exécuter, dans l'ordre où les lignes de code $LI_j$ de ce bloc de base sont enregistrées dans la mémoire 4, les instructions codées par chacune de ces lignes de code.

Pour chacune des lignes de code $LI_j$ à exécuter du code machine 32, le microprocesseur 2 exécute les étapes suivantes.

Lors d'une étape 164, le microprocesseur 2 charge dans un registre de l'ensemble 12, la ligne de code enregistrée à l'adresse @j contenue dans le compteur ordinal 26.

Ensuite, le module 28 procède à une étape 166 de sécurisation de l'instruction codée dans la ligne de code chargée.

Le fonctionnement de l'étape 166 est maintenant décrit dans le cas de la ligne $LI_j$. Plus précisément, lors de l'étape 166, le module 28 réalise successivement les opérations suivantes.

Lors d'une opération 170, le module 28 vérifie s'il existe une erreur dans le cryptogramme $CI_j^*$ ou le code $MAC_j$ à l'aide du code $ECC_{Lj}$ contenu dans la ligne $LI_j$ chargée. Par exemple, pour cela, le module 28 construit, à l'aide d'une fonction préprogrammée et du cryptogramme $CI_j^*$ et du code $MAC_j$, un code $ECC_{Lj}$'. Si le code $ECC_{Lj}$' est différent du code $ECC_{Lj}$, alors une erreur est détectée. Si une erreur est détectée, le module 28 procède immédiatement à une étape 172.

Lors de l'étape 172, le module 28 déclenche le signalement d'une faute d'exécution.

Ici, en parallèle de l'étape 172, si une erreur est détectée, le module 28 procède à une opération 174. Lors de l'opération 174, il corrige le cryptogramme $CI_j^*$ et le code $MAC_j$ à partir des informations contenues dans le code $ECC_{Lj}$. À l'issue de l'étape 174, le cryptogramme $CI_j^*$ corrigé et le code $MAC_j$ corrigé sont utilisés à la place, respectivement, du cryptogramme $CI_j^*$ et du code $MAC_j$ contenus dans la ligne $LI_j$.

L'opération 170 permet notamment de détecter et de corriger des fautes introduites dans les lignes de code stockées dans la mémoire 4 ou dans le support 6.

À l'issue de l'opération 174 ou si aucune erreur n'a été détectée lors de l'opération 170, le procédé se poursuit par une opération 176.

Lors de l'opération 176, le module 28 vérifie l'intégrité et l'authenticité du cryptogramme $CI_j^*$ à l'aide du code $MAC_j$. Par exemple, pour cela, le module 28 construit une étiquette du cryptogramme $CI_j^*$ puis chiffre cette étiquette avec la clé k' contenue dans sa mémoire 29. Si le cryptogramme ainsi construit est identique au code $MAC_j$ chargé, alors l'intégrité et l'authenticité du cryptogramme $CI_j^*$ est confirmée. Dans ce cas, le module 28 procède à une opération 178. Dans le cas contraire, le module 28 procède à l'étape 172.

L'opération 176 permet d'une part de valider l'authenticité de la ligne de code chargée et aussi de valider que, lors de l'opération 174, le cryptogramme $CI_j^*$ et/ou le code $MAC_j$ ont correctement été corrigés. La vérification de l'authenticité empêche le remplacement de la ligne de code par une autre ligne de code construite par un auteur qui ne connaît pas la clé k'.

Lors de l'opération 178, le module 28 déchiffre le cryptogramme $CI_j^*$ en utilisant la clé ka et le vecteur d'initialisation ivk pour obtenir l'instruction $I_j$ et le code $ECC_{Ij}$ déchiffrés. La clé ka a été enregistrée dans la mémoire 29 lors de l'étape 162. Le vecteur $iv_k$ nécessaire pour déchiffrer le cryptogramme $CI_j^*$ a été enregistré dans la mémoire 29 lors de l'exécution du bloc de base précédent celui qui contient cette ligne $LI_j$ actuellement traitée. Si la ligne $LI_j$ est contenue dans le premier bloc de base $BB_{ini}$ du code machine 32, c'est le vecteur $iv_{ini}$ enregistré dans la mémoire 29 lors de l'étape 162 qui est utilisé.

Ici, c'est l'exécution de l'instruction de branchement par l'unité 10 qui indique au module 28 qu'il doit remplacer le vecteur d'initialisation actuellement utilisé par le vecteur d'initialisation chargé lors de l'exécution du bloc de base précédent.

Ensuite, lors d'une opération 180, le module 28 enregistre l'instruction $I_j$ déchiffrée et le code $ECC_{Ij}$ déchiffré dans la file 22.

Une fois que l'unité 10 a exécuté toutes les instructions qui précèdent l'instruction $I_j$ dans la file 22, c'est-à-dire lorsque l'instruction $I_j$ est la prochaine instruction à exécuter par l'unité 10, le module 28 procède à une opération 184.

Lors de l'opération 184, le module 28 vérifie s'il existe une erreur dans l'instruction $I_j$ contenue dans la file 22 à l'aide du code $ECC_{Ij}$ associé à l'instruction $I_j$ et contenu dans cette même file 22. Cette opération est réalisée de façon similaire à ce qui a été décrit pour l'opération 170.

Si le module 28 détecte une erreur, alors il procède immédiatement à l'étape 172. De plus, en parallèle, lors d'une opération 186, le module 28 corrige l'instruction $I_j$ à l'aide du code $ECC_{Ij}$. L'opération 186 est similaire à l'opération 174.

Ensuite, à l'issue de l'opération 186 ou si aucune erreur n'a été détectée lors de l'opération 184, l'étape 166 se termine et le procédé se poursuit par une étape 190 d'exécution de l'instruction $I_j$ par l'unité 10.

Comme représenté sur la figure 6, en parallèle de l'étape 190, le procédé peut comporter :

- une étape 198 de sécurisation de l'unité 10, et/ou
- une étape 250 de sécurisation des données traitées.

Ces étapes 198 et 250 sont décrites plus en détail dans les chapitres suivants.

L'opération 184 permet de détecter une modification de l'instruction $I_j$ qui interviendrait entre l'instant où elle est enregistrée dans la file 22 et l'instant où elle est exécutée par l'unité 10. L'opération 184 permet aussi de déclencher une faute d'exécution si le flot de contrôle du code machine 32 a été modifié. En effet, une modification du flot de contrôle se traduit par le fait qu'après l'exécution du bloc de base $BB_{k-1}$ ce n'est pas le bloc de base $BB_k$ qui est exécuté mais un autre bloc de base $BB_t$. Dans ce cas, lors de l'exécution du bloc $BB_{k-1}$, le vecteur d'initialisation $iV_{k-1}$ est chargé dans la mémoire 29. Dès lors, lors de l'exécution du bloc $BB_t$, le cryptogramme $CI_j^*$ est déchiffré à l'aide du vecteur $iv_k$ qui correspond au $BB_k$ et non pas à l'aide du vecteur $iv_t$ qui correspond au bloc $BB_t$. Par conséquent, le déchiffrement du cryptogramme $CI_j^*$ à l'aide du vecteur $iv_k$ conduit à l'obtention d'une instruction $I_j$ et d'un code $ECC_{Ij}$ incorrects et ceci est détecté lors de l'opération 184.

De façon similaire, l'opération 184 permet aussi de détecter une perturbation de l'exécution de l'opération « Return » du bloc de base 82.

Lors de l'exécution du code machine 32, si des attaques conduisent à altérer une instruction à protéger ou à modifier le flot de contrôle, le microprocesseur 2 signale, lors de l'étape 172, une faute dans l'exécution du code machine 32. En réponse à un tel signalement, lors d'une étape 192, le microprocesseur 2 met en œuvre une ou plusieurs contre-mesures. De très nombreuses contre-mesures sont possibles. Les contre-mesures mises en œuvre peuvent avoir des degrés de sévérité très différents. Par exemple, les contre-mesures mises en œuvre peuvent aller d'un simple affichage ou une simple mémorisation d'un message d'erreur sans interrompre l'exécution normale du code machine 32 jusqu'à une mise hors service définitive du microprocesseur 2. Le microprocesseur 2 est considéré comme étant hors service lorsqu'il est définitivement placé dans un état où il est incapable d'exécuter un quelconque code machine. Entre ces degrés de sévérité extrêmes, il existe de nombreuses autres contre-mesures possibles telles que :

- l'indication par l'intermédiaire d'une interface homme-machine de la détection des fautes,
- l'interruption immédiate de l'exécution du code machine 32 et/ou sa réinitialisation, et
- la suppression du code machine 32 de la mémoire 4 et/ou la suppression de la copie 40 de sauvegarde et/ou la suppression des données secrètes.

De plus, ici, la contre-mesure mise en œuvre lors de l'étape 192 peut être sélectionnée en fonction de l'erreur détectée et donc en fonction de l'opération qui a conduit à la détection de cette faute. Par exemple, la contre-mesure sélectionnée ne sera pas la même selon que l'erreur a été détectée lors de l'opération 170, 176 ou 184.

CHAPITRE IV: SÉCURISATION DE L'UNITÉ ARITHMÉTIQUE ET LOGIQUE 10 :

Dans ce chapitre, par « instruction arithmétique et logique », on désigne une instruction du jeu d'instructions du microprocesseur 2 qui, lorsqu'elle est exécutée par ce microprocesseur, enregistre dans un registre $R_{res}$ du microprocesseur une donnée obtenue :

- soit en modifiant les bits d'une seule donnée $D_1$ enregistrée dans un registre du microprocesseur, ou,
- soit en combinant entre eux les bits de plusieurs données $D_1$ à $D_n$ enregistrées, respectivement, dans des registres $R_1$ à $R_n$ du microprocesseur 2, où n est un entier égal au nombre de données à combiner.

Classiquement, n est égal à deux dans le cas où plusieurs données doivent être combinées. n égal à un correspond au cas où l'instruction arithmétique et logique modifie les bits d'une seule donné $D_1$.

Les registres dans lesquels sont enregistrées la ou les données à traiter sont typiquement identifiés par un ou plusieurs opérandes de l'instruction arithmétique et logique. De même, le registre $R_{res}$ dans lequel le résultat $D_{res-p}$ de l'instruction arithmétique et logique doit être enregistré peut aussi être identifié par un opérande de cette instruction arithmétique et logique.

L'opcode de l'instruction arithmétique et logique identifie l'opération à exécuter par l'unité 10 pour modifier ou combiner la ou les données $D_1$ à $D_n$. Par la suite, le symbole « * » est utilisé pour désigner de façon générique cette opération. Ainsi, la notation $D_1*D_2*...*D_n$ désigne de façon générique l'opération exécutée par l'instruction arithmétique et logique lorsqu'elle est exécutée par le microprocesseur 2.

Dans le cas où n est égal à un, l'opération arithmétique et logique est par exemple choisie dans le groupe constitué :

- des opérations de décalage à droite et à gauche des bits de la donnée $D_1$, et
- des opérations d'extraction d'une plage de bits prédéfinie de la donnée $D_1$.

Dans le cas où n est supérieur ou égal à deux, l'opération « * » est choisie dans le groupe constitué des opérations suivantes :

- l'opération arithmétique d'addition,
- l'opération arithmétique de soustraction,
- l'opération arithmétique de multiplication,
- l'opération arithmétique de division,
- l'opération logique « OU »,
- l'opération logique « OU exclusif »,
- l'opération logique « ET ».

En injectant des fautes lors du fonctionnement de l'unité 10, il est possible de perturber son fonctionnement de sorte que le résultat de l'exécution de l'instruction arithmétique et logique ne correspond pas à celui attendu. On dit alors qu'on a provoqué un dysfonctionnement de l'unité 10.

Ce chapitre décrit une solution pour détecter un tel dysfonctionnement de l'unité 10. Ici, cette solution est décrite dans le cas particulier où elle est implémentée en combinaison avec la solution décrite au chapitre précédent. Elle correspond à l'étape 198 représentée sur la figure 6.

Les registres $R_1$ à $R_n$ et le registre $R_{res}$ sont, par exemple, des registres de l'ensemble 12 du microprocesseur 2.

Par la suite, l'étape 198 est décrite dans le cas particulier où les instructions arithmétique et logique dont on souhaite sécuriser l'exécution sont les instructions de la liste suivante :

1 : L'instruction d'addition des données $D_1$ et $D_2$ contenues dans, respectivement, les registres $R_1$ et $R_2$. Cette opération est désignée par le pseudocode « ADD $R_1$, $R_2$ ».

2 : L'instruction de soustraction des données $D_1$ et $D_2$ contenues dans, respectivement, les registres $R_1$ et $R_2$. Le pseudocode utilisé pour désigner cette opération est « SUB $R_1$, $R_2$ ».

3 : L'instruction de multiplication des données $D_1$ et $D_2$ contenues dans, respectivement, les registres $R_1$ et $R_2$. Le pseudocode utilisé pour désigner cette opération est « MUL $R_1$, $R_2$ ».

4 : L'instruction de division de la donnée $D_1$ par la donnée $D_2$ contenue dans, respectivement, les registres $R_1$ et $R_2$. Le pseudocode utilisé pour désigner cette opération est « DIV $R_1$, $R_2$ ».

5 : L'instruction « OU exlcusif » entre les données $D_1$ et $D_2$ contenues dans, respectivement, les registres $R_1$ et $R_2$. Le pseudocode utilisé pour désigner cette opération est « XOR $R_1$, $R_2$ ».

6 : L'instruction « ET logique » entre les données $D_1$ et $D_2$ contenues dans, respectivement, les registres $R_1$ et $R_2$. Le pseudocode utilisé pour désigner cette opération est « AND $R_1$, $R_2$ ».

7 : L'instruction « OU logique » entre les données $D_1$ et $D_2$ contenues dans, respectivement, les registres $R_1$ et $R_2$. Le pseudocode utilisé pour désigner cette opération est « OR $R_1$, $R_2$ ».

8 : L'instruction de décalage d'un bit à droite de la donnée $D_1$ contenue dans le registre $R_1$. Le pseudocode utilisé pour désigner cette opération est « SHIFTR $R_1$ ».

9 : L'instruction de décallage d'un bit à gauche de la donnée $D_1$ contenue dans le registre $R_1$. Le pseudocode utilisé pour désigner cette opération est « SHIFTL $R_1$ ».

Par la suite, le numéro associé par la liste ci-dessus à chaque instruction arithmétique et logique est utilisé pour identifier cette instruction. Ainsi, l'instruction $I_1$ est l'addition, l'instruction $I_2$ est la soustraction et ainsi de suite.

Ici, la taille de chaque donnée $D_1$, $D_2$ et $D_{res}$ est par exemple égale à la taille des instructions $I_j$ du jeu d'instructions du microprocesseur 2. Ici, cette taille est donc égale à 32 bits.

Les structures des registres $R_1$, $R_2$ et $R_{res}$ sont identiques et représentées dans le cas particulier du registre $R_1$ sur la figure 7.

Le registre R1 comporte :

- une plage de 32 bits contenant la donnée $D_1$,
- une plage contenant un code $ECC_{D1}$ permettant de détecter et de corriger une erreur dans la donnée $D_1$, et
- neuf plages de bits successives contenant, respectivement, des codes $C_{1,1}$ à $C_{1,9}$.

Le code $ECC_{D1}$ est par exemple construit comme décrit dans le cas du code $ECC_{Ij}$ sauf qu'il est construit à partir de la donnée $D_1$ et non pas à partir de l'instruction $I_j$. Par exemple, ce code $ECC_{D1}$ est généré lors de l'exécution ou lors de la génération du code binaire 30.

Lors de l'enregistrement de la donnée $D_1$ dans le registre $R_1$, chaque code $C_{1,1}$ à $C_{1,9}$ est généré par le module 28 à l'aide d'une relation préprogrammée définie de façon générique de la façon suivante : $C_{i,*} = F_*(D_i)$ où :

- l'indice i identifie un registre parmi les registres $R_1$, $R_2$ et $R_{res}$,
- l'indice * identifie l'instruction arithmétique et logique parmi les instructions $I_1$ à $I_9$, et
- la fonction F* est une fonction préprogrammée dans le module 28 associée à l'instruction arithmétique et logique identifiée par l'indice*.

La taille du code $C_{i,*}$ est notée $N_{i,*}$. La taille $N_{i,*}$ est généralement inférieure à la taille des données $D_1$, $D_2$ et $D_{res}$ et souvent au moins deux fois plus petite.

Ici, les valeurs 1, 2 et 3 de l'indice i désigne, respectivement, les registres $R_1$, $R_2$ et $R_{res}$. Les valeurs 1 à 9 de l'indice * désigne, respectivement, les instructions $I_1$ à $I_9$.

Dans le cas des instructions pour lesquelles n est supérieur ou égal à 2, c'est-à-dire ici dans le cas des instructions $I_1$ à $I_7$, la fonction F* est un homomorphisme d'un ensemble A muni de l'opération « * » vers un ensemble B muni de l'opération « # » telle que $F_*(D_1 * D_2) = F_*(D_i) \# F_*(D2)$. Ici, l'ensemble A est l'ensemble des nombres codables sur 32 bits, c'est-à-dire l'ensemble des données $D_1$ et $D_2$ possibles. L'ensemble B est l'ensemble des nombres codables sur $N_{i,*}$ bits. Autrement dit, en utilisant les notations précédemment introduites, la fonction F* est telle que $F_*(D_{res-p}) = C_{1,*} \# C_{2,*}$ en cas d'absence de dysfonctionnement de l'unité 10.

Pour chaque instruction $I_1$ à $I_7$, il est possible de trouver de nombreuses fonctions F* qui conviennent. Ci-dessous, à titre d'illustration, pour chacune des instructions $I_1$ à $I_7$, une ou plusieurs fonctions F* possibles sont données.

Une fonction $EDC(D_i)$ qui retourne à un code détecteur d'erreur de la donnée $D_i$. Cette fonction EDC est par exemple une somme de contrôles (« checksum » en anglais). De telles fonctions $EDC(D_i)$ présentent une ou plusieurs des propriétés suivantes :

- $$EDC(D_1 + D_2) = EDC(D_1) + EDC(D_2),$$

- $$EDC(D_1 - D_2) = EDC(D_1) - EDC(D_2),$$

- $$EDC(D_1 \times D_2) = EDC(D_1) \times EDC(D_2),$$

où les symboles « + », « - », et « x » désignent respectivement, les opérations d'addition, de soustraction et de multiplication.

Ainsi, de telle fonctions EDC conviennent pour la réalisation des fonctions $F_1$, $F_2$ et $F_3$. On notera de

plus que dans ce cas particulier, les opérations « # » et « * » sur les ensembles B et A sont identiques.

La fonction $p(D_i)$ qui retourne 0 si la donnée $D_i$ est paire et 1 sinon. Cette fonction présente la propriété suivante : $p(D_1 + D_2) = p(D_1)$ XOR $p(D_2)$ et $p(D_1 \times D_2) = p(D_1)$ OR $p(D_2)$, où les symboles « XOR » et « OR » désignent, respectivement, les opérations « OU exclusif » et « OU ».Cette fonction convient donc pour l'implémentation des fonctions $F_1$ et $F_3$.

Une fonction logarithme notée « Log ». Une fonction logarithme présente les propriétés suivantes : $Log(D_1 \times D_2) = Log(D_1) + Log(D_2)$ et $Log(D_1/D_2) = Log(D_1) - Log(D_2)$, où le symbole « / » désigne l'opération de division. Ainsi, un logarithme convient pour des implémentations des fonctions $F_3$ et $F_4$. Dans ce cas, l'opération « # » est l'addition ou la soustraction.

La fonction $CS(D_i)$ qui retourne la somme de contrôles de la donnée $D_i$. Cette fonction présente les propriétés suivantes :

- $CS(D_1$ XOR $D_2) = CS(D_1)$ XOR $CS(D_2)$,
- $CS(D_1$ AND $D_2) = CS(D_1)$ AND $CS(D_2)$,
- $CS(D_1$ OR $D_2) = CS(D_1)$ OR $CS(D_2)$,

où le symbole « AND » désigne l'opération « ET » logique. Ainsi, cette fonction convient pour une implémentation des fonctions $F_5$, $F_6$ et $F_7$.

Dans le cas où n est égal à 1, c'est-à-dire ici dans le cas des instructions $I_8$ et $I_9$, la fonction $F^*$ n'est pas un homomorphisme. Dans ce cas, la fonction $F^*$ est tel qu'il existe une fonction $T^*$ tel que $F_*(D_i) = T^*(F_*(D_1))$. Autrement dit, la fonction $T^*$ est invariante par $F_*(D_1)$. La fonction $T^*$ retourne donc le code $C_{1,*}$ à partir du code $C_{1,*}$.

Dans le cas de l'instruction $I_9$, la fonction $F_9$ est par exemple la fonction qui calcule une somme de contrôle sur tous les bits de la donnée $D_1$ sauf sur son bit de poids le plus fort, c'est-à-dire sans prendre en compte le bit le plus à gauche de la donnée $D_1$. La fonction $T_9$ est alors la même somme de contrôle sur tous les bits de $F_9(D_1)$ sauf le bit de poids le plus faible, c'est-à-dire celui situé le plus à droite dans $F_9(D_1)$. Avec de telles fonctions $F_9$ et $T_9$, on a bien la relation suivante : $F_9(D_1) = T_9(F_9(D_1))$. Ces fonctions $F_9$ et $T_9$ conviennent donc pour l'instruction $I_9$.

De plus, en choisissant les fonctions $F_8$ et $T_8$ égales, respectivement, aux fonctions $T_9$ et $F_9$, on obtient une implémentation possible pour les fonctions $F_8$ et $T_8$.

La figure 8 représente le détail des opérations réalisées par microprocesseur 2 lors de l'exécution de l'étape 198 pour sécuriser l'exécution des instructions arithmétique et logique $I_1$ à $I_9$.

À chaque fois qu'une instruction de chargement d'une donnée dans l'un des registres $R_i$ est exécutée par l'unité 10, lors de l'étape 190, la donnée $D_i$ et le code $EEC_{Di}$ sont écrits dans ce registre $R_i$.

En réponse, lors d'une opération 202, pour chaque instruction $I_1$ à $I_9$, le module 28 calcule chacun des codes $C_{i,*}$ correspondant à l'aide de la relation $C_{i,*} = F_*(D_i)$, où :

- $D_i$ est la nouvelle donnée chargée dans le registre $R_i$, et
- la fonction $F^*$ est la fonction préprogrammée dans le module 28 et associée à l'opération « * ».

Chacun des codes $C_{i,*}$ ainsi calculés est enregistré dans le registres $R_i$ comme représenté sur la figure 7.

Avant l'exécution des instructions $I_1$ à $I_7$, l'opération 202 est exécutée une fois pour la donnée $D_1$ et une fois pour la donnée $D_2$. Dans le cas des instructions $I_8$ et $I_9$, il suffit que l'opération 202 soit exécutée une seule fois pour la donnée $D_1$ avant l'exécution de l'une des instructions $I_8$ et $I_9$.

Ensuite, à chaque fois qu'une instruction arithmétique et logique est sur le point d'être exécutée par l'unité 10, juste avant son exécution, lors d'une opération 204, le module 28 vérifie s'il existe une erreur dans la donnée contenue dans le registre $R_i$ identifié par un opérande de l'instruction $I_j$ à exécuter.

Lors de cette opération, pour chaque registre $R_i$ concerné, le module 28 vérifie, à l'aide du code $EEC_{Di}$, si la donnée $D_i$ actuellement enregistrée dans ce registre présente une erreur ou pas. Cette opération est, par exemple, réalisée comme décrit dans le cas de l'opération 170.

Si le module 28 détecte une erreur, il procède à l'étape 172 et, en parallèle, à une opération 206. Lors de l'opération 206, il corrige la donnée $D_i$. L'opération 206 est par exemple réalisée de façon similaire à ce qui a été décrit pour l'opération 174.

Si le module 28 ne détecte aucune erreur ou à l'issue de l'opération 206, lors de l'étape 190, le microprocesseur 2 décode l'instruction $I_j$ puis l'unité 10 l'exécute et enregistre le résultat $D_{res-p}$ dans le registre $R_{res}$.

En réponse, lors d'une opération 210, le module 28 calcule le code $ECC_{D3}$ et tous les codes $C_{3,*}$ à partir de la donnée $D_{res-p}$ enregistrée dans le registre $R_{res}$ et enregistre ces différents codes calculés dans le registre $R_{res}$. Typiquement, le calcul des codes $C_{3,*}$ est ici réalisé comme décrit pour l'opération 202.

Ensuite, lors d'une opération 212, le module 28 vérifie si un dysfonctionnement de l'unité 10 s'est produit lors de l'exécution de l'instruction arithmétique et logique.

Si l'instruction exécutée lors de l'étape 190 est l'une des instructions $I_1$ à $I_7$, alors le module 28 exécuté les sous-opérations suivantes.

Lors d'une sous-opération 214, le module 28 sélectionne, parmi les instructions $I_1$ à $I_7$, celle qui correspond à l'opération arithmétique exécutée. Dans les sous-opérations suivantes, le symbole « * » désigne l'instruction ainsi sélectionnée et $F^*$ la fonction préprogrammée qui lui est associée.

Lors d'une sous-opération 216, le module 28 sélectionne aussi, parmi les différents codes $C_{3,*}$ enre-

gistrés dans le registre $R_{res}$, le seul code $C_{3,*}$ qui correspond à l'instruction sélectionnée. Par la suite, le code $C_{3,*}$ sélectionné lors de cette sous-opération est noté $C_{res-p}$.

Puis, lors d'une sous-opération 218, le module 28 calcule aussi un code $C_{res-t}$ en combinant les codes $C_{1,*}$ et $C_{2,*}$ enregistrés, respectivement, dans les registres $R_1$ et $R_2$ préalablement à l'exécution de l'instruction arithmétique et logique. Plus précisément, le module 28 calcule le code $C_{res-t}$ à l'aide de la relation suivante : $C_{res-t} = C_{1,*} \# C_{2,*}$, où le symbole « # » désigne l'opération telle que $F_*(D_1*D_2) = F_*(D_i) \# F_*(D2)$.

Par exemple, dans le cas de l'instruction $I_1$ et de la fonction parité p(..) précédemment décrite, l'opération « # » est l'opération « OU exclusif ». Dans ce cas, le code $C_{res-t}$ est le résultat du ou exclusif suivant $C_{1,1}$ XOR $C_{2,1}$.

Enfin, lors d'une sous-opération 220, le module 28 compare les codes $C_{res-p}$ et $C_{res-t}$ calculés. Si ces codes sont différents, le module 28 déclenche l'exécution de l'étape 172. Dans le cas contraire, aucun signalement d'une faute d'exécution n'est déclenché et le procédé se poursuit par l'exécution de l'instruction suivante de la file 22.

L'exécution de ces sous-opérations 214 à 220 permet de détecter un dysfonctionnement de l'unité 10 car les codes calculés $C_{res-p}$ et $C_{res-t}$ sont identiques seulement si l'unité 10 a correctement exécuté l'opération « * ». Ceci s'explique par la relation suivante : $C_{res-p} = F_*(D_{res-p}) = F_*(D_1*D_2) = F_*(D_1) \# F_*(D_2) = C_{1,*} \# C_{2,*} = C_{res-t}$.

Si l'instruction exécutée lors de l'étape 190 est l'une des instructions $I_8$ et $I_9$, alors lors d'une sous-opération 222, le module 28 sélectionne la fonction T* associée à cette instruction arithmétique et logique, c'est-à-dire la fonction $T_8$ s'il s'agit de l'instruction $I_8$, sinon la fonction $T_9$.

Lors d'une sous-opération 224, le module 28 sélectionne le code $C_{1,*}$ associé à l'opération « * » exécutée lors de l'étape 190. Ce code sélectionné est noté $C_{res-t}$.

Lors d'une sous-opération 226, le module 28 calcule un code $C_{res-p}$ à l'aide de la relation $C_{res-p} = T_*(D_{res-p})$ où T* est la fonction sélectionnée lors de la sous-opération 222.

Après la sous-opération 224, le procédé se poursuit par la sous-opération 220.

Dans le cas des instructions $I_8$ et $I_9$, les codes $C_{res-p}$ et $C_{res-t}$ sont identiques uniquement si l'unité 10 a correctement fonctionné. Ceci se démontre à l'aide de la relation suivante : $C_{res-p} = T_*(D_{res-p}) = T_*(F_*(D_1)) = F_*(D_1) = C_{1,*} = C_{res-t}$.

## CHAPITRE V : SÉCURISATION DES DONNÉES

Le code binaire 30, en plus du code machine 32, peut comporter des données à traiter lors de l'exécution du code machine 32. De plus, lors de l'exécution du code machine 32, celui-ci peut générer des données. Ces données sont typiquement contenues dans des blocs de données qui correspondent chacun à une plage prédéterminée d'adresses de la mémoire 4 dédiée au stockage de ces données. De tels blocs de données sont aussi connus sous le terme de « segment de données » ou de « page de données ».

Pour lire une donnée d'un bloc de données, le code machine 32 comporte une instruction de chargement qui, lorsqu'elle est exécutée par le microprocesseur 2, provoque le chargement d'une ligne de code $LD_j$ située à l'adresse @$_j$ à l'intérieur de ce bloc de données. Dans ce cas, contrairement aux lignes de code $LI_j$ décrites dans le chapitre III, la ligne $LD_j$ code une donnée $D_j$ à traiter par le microprocesseur et non pas une instruction $I_j$ exécutable par l'unité 10.

Pour écrire une donnée dans un bloc de données, le code machine 32 comporte une instruction d'écriture qui, lorsqu'elle est exécutée par le microprocesseur 2, provoque l'écriture d'une ligne $LD_j$ dans l'un des blocs de données.

De façon similaire à ce qui a été décrit dans le cas des instructions $I_j$, une donnée $D_j$ peut être corrompue dans la mémoire 4 ou dans des registres du microprocesseur 2 par la mise en œuvre d'attaques telle qu'une attaque par injection de fautes. De plus, un attaquant peut aussi essayer de modifier le fonctionnement du code binaire 30 en déplaçant les données codées dans la mémoire 4 ou en les remplaçant par des données plus anciennes. Ainsi, il est aussi utile de sécuriser les données enregistrées dans la mémoire 4 ou dans des registres internes du microprocesseur.

À cet effet, chaque ligne de code $LD_j$ codant une donnée présente la structure représentée sur la figure 9. La structure des lignes $LD_j$ est pratiquement identique à celle des lignes $LI_j$ codant des instructions. Plus précisément, la structure de la ligne $LD_j$ est identique à la structure de la ligne $LI_j$ sauf que le cryptogramme $CI_j*$ est remplacé par un cryptogramme $CD_j*$. Étant donné que les codes $MAC_j$ et $ECC_{Lj}$ de la ligne $LD_j$ sont calculés comme déjà décrit dans le cas des lignes $LI_j$, ils sont ici désignés par les mêmes symboles et ne seront pas décrits à nouveau.

Le cryptogramme $CD_j*$ est obtenu en chiffrant, avec la fonction $f_{ka}$, une concaténation $CD_j$. Ici, la fonction $f_{ka}$ est la même que celle déjà décrite dans le cas des lignes $LI_j$. Ainsi, le cryptogramme $CD_j*$ est obtenu à l'aide de la relation suivante : $CD_j* = f_{ka}(CD_j ; iv_j)$. La fonction $f_{ka}$ est préprogrammée dans le module 28.

La concaténation $CD_j$ est la concaténation de la donnée $D_j$ et d'un code $ECC_{Dj}$. Le code $ECC_{Dj}$ permet de détecter et de corriger une erreur dans la donnée $D_j$. Il est typiquement construit comme décrit pour le code $ECC_{Lj}$.

Le cryptogramme $CD_j*$ diffère du cryptogramme $CI_j*$ en ce que le vecteur d'initialisation $iv_j$ utilisé lors du chiffrement de la concaténation $CD_j$ est fonction de l'adresse @$_j$ où est enregistrée la ligne $LD_j$. À cet effet,

le module 28 comporte une fonction préprogrammée $F_{iv}$ qui, à chaque adresse $@_j$ de la mémoire 4 associe un vecteur d'initialisation $iv_j$ différent. De préférence, la fonction $F_{iv}$ est telle qu'à deux adresses consécutives quelconque $@_j$ et $@_{j+1}$, elle associe deux vecteurs différents, respectivement $iv_j$ et $iv_{j+1}$, et l'écart entre les valeurs numériques de ces deux vecteurs $iv_j$ et $iv_{j+1}$ varie en fonction de l'indice j. Par exemple, la fonction $F_{iv}$ est une fonction de hachage ou de chiffrement. On a donc la relation suivante : $iv_j = F_{iv}(@_j)$.

La sécurisation des données $D_j$ va maintenant être décrite plus en détail en référence au procédé de la figure 10 et dans le cas particulier où elle est mise en œuvre en combinaison avec les enseignements des chapitres précédents. Plus précisément, la sécurisation des données $D_j$ intervient à chaque fois que l'instruction exécutée lors de l'étape 190 est une instruction de chargement ou d'écriture ou de traitement d'une donnée $D_j$. Le procédé de la figure 10 représente les opérations exécutées lors de l'étape 250 pour sécuriser les données $D_j$.

À chaque fois que lors de l'étape 190, l'unité 10 exécute une instruction qui conduit à enregistrer une nouvelle donnée $D_j$ dans un registre noté ici $R_j$ du microprocesseur 2, lors d'une opération 252, le module 28 calcule le code $ECC_{Dj}$ à partir de la donnée $D_j$. Ce code $ECC_{Dj}$ calculé est ensuite concaténé avec la donnée $D_j$ dans le registre $R_j$.

Ultérieurement, lors d'une nouvelle exécution de l'étape 190, l'unité 10 exécute une instruction d'enregistrement de la donnée $D_j$ contenue dans le registre $R_j$ à l'adresse $@_j$ de la mémoire 4.

En réponse, lors d'une opération 254, le module 28 construit la ligne de code $LD_j$ qui doit être enregistrée à l'adresse $@_j$ à partir de la donnée $D_j$. Pour cela, lors de cette opération, le module 28 :

- calcule un vecteur d'initialisation $iv_j$ à l'aide de la relation $iv_j = Fi_v(@_j)$, puis
- chiffre la concaténation $CD_j$ de la donnée $D_j$ et du code $ECC_{Dj}$ à l'aide de la fonction $f_{ka}$ et du vecteur d'initialisation $iv_j$ calculé selon la relation suivante : $CD_j^* = f_{ka}(CD_j ; iv_j)$, puis
- calcule le code $MAC_j$ à partir du cryptogramme $CD_j^*$, puis
- calcule le code $ECC_{Lj}$ à partir du cryptogramme $CD_j^*$ et du code $MAC_j$ calculé.

Ensuite, la ligne $LD_j$ construite est transférée et enregistrée dans la mémoire 4 à l'adresse $@_j$.

L'adresse $@_j$ est située à l'intérieur d'un bloc prédéterminé de données $BD_m$. Chaque bloc de données $BD_m$ est associé à un code $EDC_m$ qui permet de détecter une erreur si l'une des lignes de code contenues dans ce bloc $BD_m$ a été modifiée depuis la dernière mise à jour du code $EDC_m$. Le code $EDC_m$ est donc un code détecteur d'erreur.

Le code $EDC_m$ peut être contenu dans la mémoire 4, par exemple à la fin du bloc de données $BD_m$ associé à ce code ou dans un registre du microprocesseur associé au bloc $BD_m$.

Lors d'une opération 256, immédiatement après ou en parallèle de l'exécution de l'instruction d'écriture de la nouvelle ligne $LD_j$ dans le bloc $BD_m$, le code $EDC_m$ associé à ce bloc $BD_m$ est mis à jour puis enregistré. Ici, pour accélérer l'exécution de cette opération 256, le code $EDC_m$ est défini par la relation suivante : $EDC_m = MAC_1 \text{ XOR } MAC_2 \text{ XOR } ... \text{ XOR } MAC_{mm}$, où :

- le symbole XOR désigne l'opération « OU exclusif »,
- les code $MAC_1$ à $MAC_{mm}$ sont les codes $MAC_j$ de toutes les lignes $LD_j$ du bloc $BD_m$, et
- mm est le nombre de lignes $LD_j$ contenues dans le bloc $BD_m$.

Lorsque le code $EDC_m$ est ainsi défini, l'opération 256 peut être réalisée à l'aide de la relation suivante : $EDC_m = EDC_m \text{ XOR } MAC_{jold} \text{ XOR } MAC_{jnew}$, où :

- les symboles $EDC_m$ à droite et à gauche du signe « = » désignent, respectivement, l'ancienne valeur du code $EDC_m$ avant l'enregistrement de la nouvelle ligne $LD_j$ et la nouvelle valeur du code $EDC_m$ après l'enregistrement de cette nouvelle ligne $LD_j$,
- $MAC_{jold}$ désigne le code $MAC_j$ de l'ancienne ligne $LD_j$ qui est remplacée par la nouvelle ligne $LD_j$, et
- $MAC_{jnew}$ désigne le code $MAC_j$ de la nouvelle ligne $LD_j$ qui est enregistrée à l'adresse $@_j$.

Ainsi, le nombre d'opérations à exécuter pour mettre à jour le code $EDC_m$ est limité.

L'opération 256 peut être réalisée par le module 28 ou par une unité de calcul incorporée dans la mémoire 4. De telles mémoires 4 incorporant une unité de calcul sont connues sous le terme anglais de « smart RAM » ou « In-memory computing ».

Si la prochaine instruction à exécuter lors de l'étape 190 est une instruction de chargement d'une ligne $LD_j$, alors, lors d'une opération 260, le module 28 vérifie, à l'aide du code $EDC_m$, s'il existe une erreur dans le bloc $BD_m$ qui contient cette ligne $LD_j$.

Si le module 28 détecte qu'il existe une erreur, alors le procédé se poursuit par l'exécution de l'étape 172 et la ligne $LD_j$ n'est pas chargée dans le microprocesseur 2.

Si le module 28 ne détecte aucune erreur, alors l'unité 10 exécute une instruction de chargement de la ligne $LD_j$ et celle-ci est chargée dans un registre du microprocesseur 2. Typiquement, cette instruction de chargement comporte un opérande qui indique à quelle adresse $@_j$ se trouve la ligne $LD_j$ à charger. Ici, lorsque l'unité 10 exécute cette instruction de chargement, elle charge la ligne $LD_j$ dans un registre $R_j$ de l'ensemble 12 par exemple.

Ensuite, le module 28 exécute des opérations 270, 274, 276 et 278 identiques, respectivement, aux opérations 170, 174, 176 et 178 du procédé de la figure 6 sauf que ce sont les codes correspondants contenus dans la ligne $LD_j$ qui sont utilisés et non pas ceux contenus dans une ligne $LI_j$.

De plus, lors de l'opération 278, le module 28 calcule le vecteur d'initialisation $iv_j$ nécessaire pour déchiffrer le cryptogramme $CD_j^*$ à partir de l'adresse $@_j$ et à l'aide de la relation $iv_j = F_{iv}(@_j)$.

Une fois que le cryptogramme $CD_j^*$ a été déchiffré, lors d'une opération 280, le module 28 enregistre la donnée $D_j$ déchiffrée et le code $ECC_{Dj}$ déchiffré dans le registre $R_j$ en attendant que cette donnée soit traitée par l'unité 10.

Lorsque la prochaine instruction qui va être exécutée par l'unité 10 est une instruction qui traite la donnée $D_j$, le module 28 procède à des opérations 284 et 286. Le module 28 identifie que la prochaine instruction à exécuter va traiter la donnée $D_j$ car cette instruction comporte généralement un opérande qui identifie le registre $R_j$ dans laquelle est enregistrée la donnée $D_j$. Les opérations 284 et 286 sont, par exemple, identiques, respectivement, aux opérations 184 et 186 du procédé de la figure 6, sauf qu'ici, c'est la donnée $D_j$ et le code $ECC_{Dj}$ qui sont utilisés et non pas l'instruction $I_j$ et le code $ECC_{Ij}$.

Ensuite, à l'issue de l'opération 286 ou si aucune erreur n'a été détectée lors de l'opération 284, l'unité 10 exécute l'instruction qui traite la donnée $D_j$.

Le procédé de sécurisation des données décrit ici présente en outre les mêmes avantages que ceux présentés au chapitre III notamment à cause du fait que la structure de la ligne $LD_j$ est pratiquement identique à celle de la ligne $LI_j$.

De plus, le fait de chiffrer la donnée $D_j$ à l'aide d'un vecteur d'initialisation $iv_j$ qui dépend de l'adresse $@_j$ permet de détecter si une ligne $LD_j$ a été déplacée à l'intérieur d'un bloc de données $BD_m$. En effet, si deux lignes $LD_1$ et $LD_2$ d'un même bloc $BD_m$ sont permutées, cela ne modifie pas nécessairement le code $EDC_m$ et une telle permutation des lignes $LD_1$ et $LD_2$ n'est pas nécessairement détectée lors de l'opération 260. Par contre, puisque la donnée $D_1$ est chiffrée avec un vecteur d'initialisation $iv_1$ qui dépend de l'adresse $@_1$, si la ligne $LD_1$ est déplacée et se situe à une adresse $@_2$ dans la mémoire 4, lors du chargement de cette ligne à partir de cette adresse $@_2$, le cryptogramme $CD_1^*$ va être déchiffré à l'aide du vecteur d'initialisation $iv_2$ et non pas à l'aide du vecteur $iv_1$. Un tel déchiffrement incorrect de la donnée $D_1$ et du code $ECC_{D1}$ est alors détecté lors de l'opération 284.

L'étape 250 décrite ici permet aussi de détecter une attaque consistant à remplacer une ligne $LD_1$ par une ligne $LD_{1old}$ différente et précédemment enregistrée à la même adresse $@_1$. Un tel remplacement ne pourra pas être détecté lors de l'exécution de l'opération 284. Par contre, il sera détecté lors de l'exécution de l'opération 260 car les lignes $LD_1$ et $LD_{1old}$ sont différentes.

La figure 11 représente un compilateur 300 apte à générer automatiquement le code binaire 30 à partir d'un code source 302. À cet effet, le compilateur 300 comporte typiquement un microprocesseur 304 programmable et une mémoire 306. La mémoire 306 contient les instructions et les données nécessaires pour, lorsqu'elles sont exécutées par le microprocesseur 304, générer automatiquement le code binaire 30 à partir du code source 302. En particulier, lors de la compilation du code source 302, le microprocesseur 304 génère automatiquement les vecteurs d'initialisation ivk appropriés et les lignes de code $LI_j$ et $LD_j$. La conception et la réalisation d'un tel compilateur sont à la portée de l'homme du métier à partir des explications données dans cette description.

Chapitre VI : VARIANTES :

Variantes de l'appareil 1 :

La mémoire 4 peut aussi être une mémoire non volatile. Dans ce cas, il n'est pas nécessaire de copier le code binaire 30 à l'intérieur de cette mémoire avant le lancement de son exécution puisqu'il s'y trouve déjà.

En variante, la mémoire 4 peut aussi être une mémoire interne intégrée à l'intérieur du microprocesseur 2. Dans ce dernier cas, elle est réalisée sur le même substrat que les autres éléments du microprocesseur 2. Enfin, dans d'autres configurations, la mémoire 4 se compose de plusieurs mémoires dont certaines sont des mémoires internes et d'autres des mémoires externes.

La mémoire principale 4 peut comporter une première mémoire volatile de grande capacité et une seconde mémoire volatile de plus petite capacité mais dans laquelle les opérations de lecture et d'écriture sont plus rapides. La deuxième mémoire est connue sous le terme de « mémoire cache ». La mémoire cache peut être une mémoire externe au microprocesseur 2 ou une mémoire interne du microprocesseur 2. Dans certains modes de réalisation, plusieurs mémoires caches de niveaux différents peuvent être utilisées.

De nombreuses architectures matérielles différentes sont possibles pour réaliser le module 28. En particulier, le module 28 peut être composé par la combinaison de plusieurs blocs matériels du microprocesseur 2 remplissant des fonctions respectives et situés chacun dans une aire différente de la puce du microprocesseur 2.

Variantes de la sécurisation du code machine :

En variante, certaines fonctions ou parties du code binaire 30 ne sont pas sécurisées. Pour gérer l'exécution d'un tel code binaire qui comporte à la fois une fonction sécurisée et des fonctions non-sécurisées, le jeu d'instructions du microprocesseur 2 peut être complété par :

- une instruction d'activation d'un mode sécurisé de fonctionnement du microprocesseur 2, et
- une instruction de désactivation de ce mode sécurisé.

Dans ce cas, l'instruction d'activation du mode sécurisé se trouve dans le code binaire 30 juste avant l'appel à la fonction sécurisée et l'instruction de désactivation du mode sécurisé se trouve juste après la fin de la fonction sécurisée. Lorsque l'instruction d'activation du mode sécurisé est chargée par le microprocesseur 2, en réponse, le module 28 commence à traiter les instructions et les données suivantes du code binaire comme décrit dans les chapitres précédents. Lorsque l'instruction de désactivation du mode sécurisé est chargée par le microprocesseur 2, en réponse, le module 28 est désactivé. Dans ce dernier cas, le traitement des instructions et des données suivantes du code binaire ne sont pas traitées par le module 28 mais directement chargées dans la file 22 ou dans les registres de l'ensemble 12.

En variante, une instruction « update » est ajoutée au jeu d'instructions du microprocesseur. Lorsque cette instruction « update » est exécutée par le microprocesseur 2, elle indique au module 28 qu'à partir de maintenant, le nouveau vecteur $iv_k$ précédemment chargé dans la mémoire 29 doit être utilisé pour déchiffrer les lignes de code $LI_j$. Dès lors, dans ce cas, l'utilisation d'un nouveau vecteur d'initialisation ivk peut être déclenchée autrement que par l'exécution d'une instruction de branchement. Dans ce cas, le procédé décrit peut aussi être mis en œuvre avec des instructions de branchement implicites. En effet, la dernière instruction qui se termine par une instruction de branchement implicite, est alors l'instruction « update ». Au lieu d'implémenter une instruction « update » en tant qu'instruction à part dans le jeu d'instructions du microprocesseur, il est possible d'ajouter un bit supplémentaire à chaque instruction du jeu d'instructions du microprocesseur 2 et de déclencher le changement de vecteur d'initialisation ivk uniquement lorsque ce bit supplémentaire prend une valeur spécifique.

Variantes de la structure d'une ligne $LI_j$ ou $LD_j$

En variante, la structure d'une ligne de code décrite en référence à la figure 2 ou 9 est mise en œuvre seulement pour les instructions $I_j$ ou seulement pour les données $D_j$ de la fonction sécurisée.

Le code $ECC_{Ij}$ ou le code $ECC_{Dj}$ peut être remplacé par un simple code détecteur d'erreur permettant seulement de détecter une erreur dans l'instruction $I_j$ ou la donnée $D_j$ avec laquelle il est concaténé. Un code détecteur d'erreur ne permet pas de corriger l'erreur détectée. Dans ce cas, l'opération 186 ou 286 de correction de l'erreur est omise. Dès lors, dès que le module 28 détecte une erreur dans une instruction $I_j$ déchiffré ou dans une donnée $D_j$ déchiffrée, par exemple, l'exécution de la fonction sécurisée est systématiquement interrompue.

Dans une variante simplifiée, le code $ECC_{Ij}$ ou $ECC_{Dj}$ est omis. Dans ce cas, le cryptogramme $CI_j^*$ ou $CD_j^*$ est seulement le cryptogramme de l'instruction $I_j$ ou de la donnée $D_j$. Dans ce mode de réalisation, le microprocesseur 2 n'est plus capable de détecter une modification de l'instruction $I_j$ ou de la donnée $D_j$ qui interviendrait entre l'instant où celle-ci est enregistrée dans la file 22 ou un registre de l'ensemble 12 et l'instant où elle est exécutée ou traitée par l'unité 10.

Le code $ECC_{Lj}$ peut être remplacé par un simple code détecteur d'erreur permettant seulement de détecter une erreur dans le cryptogramme $CI_j^*$ ou $CD_j^*$ et/ou le code $MAC_j$ contenus dans la même ligne de code. Dans ce cas, l'opération 174 ou 274 de correction est omise. Dès lors, dès que le module 28 détecte une erreur dans le cryptogramme $CI_j^*$ ou $CD_j^*$ ou dans le code $MAC_j$, par exemple, l'exécution de la fonction sécurisée est interrompue.

Dans une autre variante, le code $ECC_{Lj}$ est construit de manière à permettre seulement la détection d'une erreur, soit seulement dans le cryptogramme $CI_j^*$ ou $CD_j^*$ soit seulement dans le code $MAC_j$.

Le code $ECC_{Lj}$ peut être omis. Dans ce cas, une erreur dans le cryptogramme $CI_j^*$ ou $CD_j^*$ ou dans le code $MAC_j$ ne peut être détectée que lors de l'exécution de l'opération 176 ou 276 de vérification de l'intégrité et de l'authenticité du cryptogramme. La détection d'une erreur à l'aide d'un code MAC est généralement plus complexe qu'à l'aide d'un simple code détecteur d'erreur ou d'un simple code correcteur d'erreur. De plus, lorsque le code $ECC_{Lj}$ est omis, dans le cas où il existe une erreur dans le cryptogramme $CI_j^*$ ou $CD_j^*$ ou le $MAC_j$, il n'est pas possible de corriger cette erreur. Dans ce dernier cas, par exemple, l'exécution de la fonction sécurisée est donc systématiquement interrompue en cas d'erreur.

La fonction utilisée pour générer le cryptogramme $CD_j^*$ peut être différente de celle utilisée pour générer le cryptogramme $CI_j^*$. Par exemple, ces deux fonctions diffèrent par le fait qu'elles utilisent des clés de chiffrement différentes.

Variantes de la sécurisation de l'unité arithmétique et logique :

Le nombre de codes $C_{i,*}$ calculés et associés à la donnée $D_i$ chargée n'est pas forcément égal au nombre total d'instructions arithmétiques et logiques différentes qui existent dans le jeu d'instructions du microprocesseur 2. Par exemple, le nombre de code $C_{i,*}$ peut être réduit quand les mêmes codes $C_{i,*}$ sont utilisés pour différentes instructions arithmétiques et logiques. Par exemple, le code $C_{i,4}$ peut être omis si les fonctions $F_3$ et $F_4$ sont toutes les deux des fonctions logarithmiques. En effet, dans ce cas, lorsque l'instruction arithmétique et logique à exécuter est une multiplication, lors de l'opération 284, le module 28 calcule le code $C_{res-t}$ à l'aide de la relation suivante : $C_{res-t} = C_{1,3} + C_{2,3}$. Pour vérifier que l'unité 10 a correctement réalisé une instruction arithmétique et logique de division, le module 28 peut calculer le code $C_{res-t}$ à l'aide de l'opération suivante : $C_{res-t} = C_{1,3} - C_{2,3}$, où les codes $C_{1,3}$ et $C_{2,3}$ sont les même que ceux utilisés pour vérifier l'opération de multiplication. Dans ce cas, il n'est pas nécessaire de calculer les codes $C_{1,4}$ et $C_{2,4}$ puisqu'ils sont identiques, respectivement, aux codes $C_{1,3}$ et $C_{2,3}$. Par contre, le code $C_{3,4}$ doit être calculé à partir de la donnée $D_{res-p}$. De façon similaire, il est possible de détecter le dysfonctionnement de l'unité 10 lors de l'exécution d'une instruction de soustraction en calculant le code $C_{res-t}$ à l'aide de la relation suivante : $C_{res-t} = C_{1,1} - C_{2,1}$ dans le cas où la fonction $F_1$ est aussi un homomorphisme pour l'ensemble B muni de l'opération de soustraction.

Dans un autre mode de réalisation, il est possible de détecter un dysfonctionnement de l'unité 10 uniquement lorsqu'elle exécute une seule ou un groupe restreint d'instructions arithmétiques et logiques du jeu d'instructions du microprocesseur 2. Dans ce cas, il existe des instructions arithmétiques et logiques pour lesquelles le microprocesseur ne vérifie pas si elles ont correctement été exécutées par l'unité 10. Cela permet de réduire le nombre de codes $C_{i,*}$ utilisés.

En variante, le code $C_{i,*}$ n'est pas enregistré dans le même registre $R_i$ que celui où est enregistrée la donnée $D_i$ mais dans un autre registre spécifiquement associé à ce registre $R_i$.

Variantes de la sécurisation des données :

La structure des lignes $LD_j$ utilisée pour sécuriser les données peut être simplifiée. Par exemple, les codes $MAC_j$ et/ou $ECC_{Lj}$ peuvent être omis.

Le code $ECC_{Dj}$ peut être remplacé par un simple code détecteur d'erreur dans la donnée $D_j$.

En variante, la fonction $F_{iv}$ est identique à la fonction $f_{ka}$ sauf qu'elle est appliquée à l'adresse $@_j$. La fonction $F_{iv}$ peut aussi utiliser le même algorithme de chiffrement que la fonction $f_{ka}$ mais avec une clé de chiffrement différente de la clé ka.

Dans une variante simplifiée, la fonction $F_{iv}$ est la fonction identité. Dans ce cas, le vecteur d'initialisation $iv_j$ est systématiquement égal à l'adresse $@_j$.

Dans d'autres modes de réalisation, pour détecter un déplacement d'une ligne $LD_j$, le code $MAC_j$ est calculé en fonction du vecteur $iv_j$. Par exemple, le code $MAC_j$ est calculé à partir de la concaténation du cryptogramme $CD_j^*$ et du vecteur $iv_j$. Le code $MAC_j$ peut aussi être calculé à partir d'une combinaison du cryptogramme $CD_j^*$ et du vecteur $iv_j$ telle que la combinaison suivante : $CD_j^*$ XOR $iv_j$. Dans le cas où le code $MAC_j$ dépend du vecteur $iv_j$, alors il peut être utilisé à la place du code $ECC_{Dj}$ pour détecter une erreur en cas de déplacement de la ligne $LD_j$ dans la mémoire 4. En effet, dans ce cas, lors de la vérification de l'intégrité et de l'authenticité du cryptogramme $CD_j^*$, le module 28 :

- calcule le vecteur $iv_j$ à l'aide de la relation $iv_j = F_{iv}(@_j)$, puis
- combine le cryptogramme $CD_j^*$ lu à l'adresse $@_j$ avec le vecteur $iv_j$ calculé, puis
- vérifie l'intégrité et l'authenticité de cette combinaison à partir du code $MAC_j$ contenu dans la même ligne $LD_j$.

Si cette ligne $LD_j$ a été déplacée, le vecteur d'initialisation calculé est différent de celui attendu. Dès lors, l'intégrité de la combinaison du cryptogramme $CD_j^*$ et du vecteur d'initialisation ne peut pas être vérifiée, ce qui déclenche le signalement d'une faute d'exécution. On remarquera que dans ce mode de réalisation, il est possible de détecter un déplacement de la ligne $LD_j$ sans même avoir à déchiffrer le cryptogramme $CD_j^*$. Dans cette variante, pour détecter un déplacement de la ligne $LD_j$, les code $ECC_{Dj}$ et $ECC_{Lj}$ peuvent être omis.

De façon similaire à ce qui a été décrit ci-dessus pour le code $MAC_j$, le code $ECC_{Lj}$ peut aussi être construit de manière à dépendre du vecteur $iv_j$. Dans ce cas, le déplacement de la ligne $LD_j$ est détecté lors de la vérifications du code $ECC_{Lj}$. Dès lors, pour détecter un déplacement de la ligne $LD_j$, les codes $ECC_{Dj}$ et $MAC_j$ peuvent être omis.

L'étape 250 a été décrite dans le cas particulier de la sécurisation d'une donnée $D_j$. Toutefois, en variante, la même étape peut être réalisée sur des lignes de code comportant une instruction $I_j$ à la place de la donnée $D_j$. Dans ce cas, le cryptogramme $CI_j^*$ est obtenu en utilisant un vecteur d'initialisation $iv_j$ et non pas le vecteur ivk comme décrit au chapitre III. Puisque le vecteur $iv_j$ est fonction de l'adresse $@_j$ où est enregistrée cette ligne de code $LI_j$, il est alors possible de détecter le déplacement d'une ligne de code codant une instruction à exécuter. Dans ce cas, typiquement, le code $ECC_{Ij}$ est utilisé pour détecter ce déplacement et non plus pour détecter une modification du flot de contrôle.

Dans les modes de réalisation décrits jusqu'à présent, à la fois la donnée $D_j$ et le code $ECC_{Dj}$ sont codés en fonction du vecteur $iv_j$ puisque le cryptogramme $CD_j^*$ est chiffré à l'aide de ce vecteur $iv_j$. En variante, soit seulement la donnée $D_j$ soit seulement le code $ECC_{Dj}$ est codé en fonction du vecteur $iv_j$. Par exemple, dans la ligne de code, le cryptogramme de la donnée $D_j$ est obtenu à partir d'une fonction de chiffrement qui n'utilise pas le vecteur $iv_j$, tandis que le cryptogramme $ECC_{DJ}^*$ du code $ECC_{Dj}$ est obtenu à l'aide de la fonction de chiffrement $f_{ka}(ECC_{Dj} ; iv_j)$. Dans ce cas, lors de l'opération 278, le module 28 déchiffre le cryptogramme de la donnée $D_j$ sans utiliser le vecteur $iv_j$ et déchiffre le cryptogramme $ECC_{Dj}^*$ en utilisant ce vecteur $iv_j$. Ensuite, le reste du procédé est identique à ce qui a déjà été décrit. Dans un mode de réalisation simplifiée, puisque la donnée $D_j$ n'a pas besoin d'être codée en fonction du vecteur $iv_j$, il est aussi possible de ne pas la chiffrer. Par exemple, la ligne de code contient alors la donnée $D_j$ en clair et le cryptogramme $ECC_{Dj}^*$. Dès lors, lors de l'opération 278, le déchiffrement de la donnée $D_j$ est omis puisqu'il suffit de l'extraire de la plage de bits dans laquelle elle est contenue dans la ligne $LD_j$.

A l'inverse, il est aussi possible de modifier la structure des lignes $LD_j$ de manière à ce que seule la

donnée $D_j$ soit codée en fonction du vecteur $iv_j$. Par exemple, la ligne $LD_j$ comporte un cryptogramme $D_j^*$ de la donnée $D_j$ obtenue en la chiffrant à l'aide de la fonction $f_{ka}(D_j ; iv_j)$ et un cryptogramme $ECC_{Dj}^*$ obtenu en chiffrant le code $ECC_{Dj}$ à l'aide d'une fonction de chiffrement indépendante du vecteur $iv_j$. Lors de l'opération 270, le module 28 déchiffre le cryptogramme $D_j^*$ à l'aide du vecteur $iv_j$ calculé et déchiffre le cryptogramme $ECC_{Dj}^*$ sans utiliser ce vecteur $iv_j$.

Jusqu'à présent, c'est une fonction de chiffrement qui a été décrite comme exemple de mode de réalisation permettant de coder la donnée $D_j$ ou le code $ECC_{Dj}$ en fonction du vecteur $iv_j$. Cette fonction de chiffrement peut toutefois être aussi simple qu'une simple opération « OU » logique entre la donnée $D_j$ et le vecteur $iv_j$ ou entre le code $ECC_{Dj}$ et le vecteur $iv_j$.

Dans un autre mode de réalisation simplifié, le code $ECC_{Dj}$ et le code $MAC_j$ sont omis. Dans ce cas, au moins l'un du cryptogramme $D_j^*$ et du code $ECC_{Lj}$ est construit en fonction du vecteur $iv_j$.

Pour la détection du déplacement de la ligne $LD_j$, il n'est pas nécessaire d'utiliser un code correcteur d'erreur. Un simple code détecteur d'erreur est suffisant. Ainsi, en variante, le ou les codes correcteurs d'erreur sont remplacés par des codes détecteurs d'erreur.

Dans un autre mode de réalisation, le code $EDC_m$ est omis. Dans ce cas, les opérations de traitement de ce code $EDC_m$ sont également omises, telles que les opérations 256 et 260.

Il est possible de construire le code $EDC_m$ différemment. Par exemple, en variante, le code $EDC_m$ est un code correcteur d'erreur qui permet en plus de corriger une erreur dans le bloc de données $BD_m$. Dans ce cas, lorsqu'une erreur est détectée dans le bloc $BD_m$, le code $EDC_m$ est utilisé pour corriger l'erreur détectée, puis le procédé se poursuit par l'opération 270.

D'autres méthodes de calcul du code $EDC_m$ sont possibles. Par exemple, en variante, le code $EDC_m$ est une somme de contrôles ou un code d'authentification de message.

Avantageusement le code $EDC_m$ est enregistré dans la mémoire 29.

Autres variantes :

Dans une autre variante, les clés ka et k' sont les mêmes.

La clé ka peut être pré-enregistrée dans la mémoire 29. Dans ce cas, le cryptogramme ka* peut être omis du bloc 34.

Une ligne de code peut être plus longue qu'un mot-machine. Dans ce cas, chaque ligne de code se compose de plusieurs mots-machine généralement situés à des adresses mémoires immédiatement consécutives dans la mémoire 4. Dans ce cas, une ligne de code est chargée dans le microprocesseur 2 non pas en une seule opération de lecture, mais en exécutant plusieurs opérations de lecteur. Chaque opération de lecture charge dans le microprocesseur un mot-machine respectif de la ligne de code.

En variante, l'opération 176 ou 276 se poursuit systématiquement par l'opération 178 ou 278 même si l'intégrité ou l'authenticité du cryptogramme n'a pas pu être confirmée. Dans ce cas, l'opération 176 ou 276 sert à déclencher le signalement d'une faute d'exécution sans interrompre l'exécution du code binaire.

Tout ce qui a été décrit au chapitre III peut être mise en œuvre indépendamment de ce qui a été décrit dans les autres chapitres. Par exemple, les étapes 198 et 250 peuvent être omises.

Dans une autre variante, le procédé décrit au chapitre III pour détecter une erreur dans le flot de contrôle est mis en œuvre indépendamment de ce qui a été décrit dans les chapitres IV et V mais aussi indépendamment de certaines des caractéristiques du procédé décrit dans le chapitre III. En particulier, pour être capable de détecter une erreur dans le flot de contrôle, les codes $ECC_{Lj}$ et $MAC_j$ peuvent être omis, ainsi que toutes les opérations de traitement de ces deux codes.

Tout ce qui a été décrit au chapitre IV peut être mis en œuvre indépendamment de ce qui a été décrit dans les autres chapitres. Par exemple, ce qui a été décrit au chapitre IV peut être mis en œuvre :

- sans que le code binaire soit chiffré,
- sans que le code $MAC_j$ soit compris dans chaque ligne de code,
- sans que les codes $ECC_{Lj}$ et $ECC_{Ij}$ ou $ECC_{Dj}$ soient mis en œuvre,
- sans que les données $D_j$ soient chiffrées à l'aide du vecteur $iv_j$.

Tout ce qui a été décrit au chapitre V peut également être mis en œuvre indépendamment de ce qui a été décrit dans les autres chapitres. Par exemple, ce qui a été décrit au chapitre V peut être mis en œuvre :

- sans que les données $D_j$ soient chiffrées,
- en ne conservant qu'un seul code détecteur d'erreur choisi dans le groupe constitué des codes $ECC_{Lj}$, $MAC_j$ et $ECC_{Dj}$, et
- sans qu'un code $C_{i,*}$ soit calculé à chaque chargement d'une donnée dans un registre.

Tous les modes de réalisation décrits dans ce texte et, en particulier, les différentes variantes, peuvent être combinés entre eux.

CHAPITRE VII : AVANTAGES DES MODES DE RÉALISATION DÉCRITS :

Avantage de la sécurisation du code binaire :

Le chiffrement des instructions $I_j$ ou des données $D_j$ permet de garantir la confidentialité du code binaire 30, ce qui rend le « Reverse Engineering » du code binaire très difficile. La vérification de l'intégrité du cryptogramme $CI_j^*$ ou $CD_j^*$ permet de détecter les modifications du code binaire provoquées, par exemple, par des attaques telles que l'injection de fautes dans la mémoire 4 ou le support 6. Le fait de vérifier l'authenticité des instructions et des données permet de détecter et de rendre très difficile l'ajout d'instructions supplémentaires dans le code binaire 30 par un attaquant, par exemple, pour y introduire des logiciels malveillants tels que des virus. En effet, même si l'attaquant connaît l'algorithme utilisé pour chiffrer les instructions $I_j$ ou les données $D_j$, il ne connaît pas la clé secrète k' utilisée pour construire le code $MAC_j$.

La vérification, à l'aide du code $ECC_{Ij}$ ou $ECC_{Dj}$, de l'existence d'une erreur dans l'instruction $I_j$ ou la donnée $D_j$ juste avant qu'elle soit utilisée permet de détecter une modification de cette instruction ou de cette donnée $D_j$ alors qu'elle est stockée dans la file 22 ou un registre de l'ensemble 12. En effet, de telles modifications peuvent être provoquées par injection de fautes dans la file 22 ou les registres de l'ensemble 12. Ainsi, l'utilisation du code $ECC_{Ij}$ ou $ECC_{Dj}$ permet de détecter ce type d'attaque.

Le fait que le code $ECC_{Ij}$ ou $ECC_{Dj}$ soit un code correcteur d'erreur et pas seulement un code détecteur d'erreur, permet de rendre le procédé d'exécution plus robuste vis-à-vis des attaques par injection de fautes dans la file 22 ou dans les registres de l'ensemble 12. En effet, dans ce cas, le code correcteur d'erreur permet souvent de corriger l'erreur introduite dans l'instruction $I_j$ ou dans la donnée $D_j$ de sorte que malgré la présence de telles erreurs, la fonction sécurisée continue de s'exécuter correctement.

L'utilisation du code $ECC_{Lj}$ permet de détecter plus rapidement une erreur dans le cryptogramme $CI_j^*$ ou $CD_j^*$ ou dans le code $MAC_j$ que si seul le code $MAC_j$ était utilisé pour cela. L'utilisation du code $ECC_{Lj}$ permet donc d'accélérer l'exécution du code binaire.

L'utilisation d'un code correcteur d'erreur pour le code $ECC_{Lj}$ permet de rendre le procédé revendiqué plus robuste vis-à-vis des attaques par injection de fautes dans la mémoire 4 ou dans le support 6. En effet, dans ce cas, le code correcteur d'erreur permet souvent de corriger le cryptogramme $CI_j^*$ ou $CD_j^*$ ou le code $MAC_j$ de sorte que malgré la présence de telles erreurs, la fonction sécurisée s'exécute correctement.

Le fait d'utiliser des clés secrètes différentes pour déchiffrer le cryptogramme $CI_j^*$ ou $CD_j^*$ et pour vérifier l'intégrité et l'authenticité du code $MAC_j$ permet d'accroître la sécurité du procédé.

Lors de l'exécution d'un bloc de base précédent, le fait de charger dans le microprocesseur le vecteur d'initialisation ivk nécessaire au déchiffrement du bloc de base $BB_k$ suivant permet de déclencher le signalement d'une faute d'exécution si un attaquant essaie de modifier l'ordre dans lequel les blocs de base du code machine 32 doivent normalement être exécutés. Plus précisément, une telle modification du flot de contrôle sera détectée grâce au code $ECC_{Ij}$ lors de l'opération 184.

L'enregistrement dans un registre du microprocesseur du vecteur d'initialisation $iv_k$ à utiliser pour déchiffrer le bloc de base exécuté après l'exécution d'une sous-fonction sécurisée permet d'appeler cette sous-fonction sécurisée depuis différents blocs de base du code machine 32 de la fonction sécurisée. En effet, dans ce cas, il n'est pas possible de coder le vecteur ivk à utiliser dans le dernier bloc de base de la sous-fonction sécurisée puisque le bloc de base suivant n'est pas toujours le même et n'est donc pas toujours chiffré à l'aide du même vecteur ivk.

La vérification de l'authenticité de la clé d'application ka à partir de différents certificats cryptographiques dont au moins un est enregistré dans la mémoire sécurisée du microprocesseur permet de garantir que le code binaire 30 a été généré par un auteur autorisé à faire cela et non pas par un tiers qui n'a pas le droit de générer de tel code binaire pour le microprocesseur 2.

## Avantages de la sécurisation de l'unité arithmétique et logique :

Lorsque des fautes sont injectées dans l'unité 10, le résultat $D_{res-p}$ obtenu à l'issue de l'exécution de l'opération arithmétique et logique peut être différent du résultat théorique $D_{res-t}$ attendu. Le procédé revendiqué permet de détecter un tel dysfonctionnement de l'unité 10 sans, par exemple, avoir à exécuter plusieurs fois l'opération arithmétique et logique défaillante.

## Avantages de la sécurisation des données :

Dans le procédé revendiqué, si un attaquant déplace une ligne $LD_j$, une erreur est alors détectée à l'aide d'un code détecteur d'erreur. Grâce à cela, il est donc beaucoup plus difficile de mettre en œuvre une attaque dans laquelle les lignes de code sont déplacées sans que cette attaque soit détectée.

L'utilisation du code détecteur d'erreur $EDC_m$ permet de détecter une attaque qui consiste à remplacer une ligne de code située à une adresse $@_j$ par une autre ligne de code qui était précédemment enregistrée à la même adresse $@_j$. En effet, un tel remplacement ne peut pas toujours être détecté en absence de ce code $EDC_m$.

Le fait de construire le code $EDC_m$ uniquement à partir des codes $MAC_j$ des lignes $LD_j$ accélère le calcul de ce code $EDC_m$ car les codes $MAC_j$ sont généralement beaucoup plus courts que la ligne de code complète. De plus, cette accélération du calcul est obtenue sans modifier la fiabilité de la détection d'erreur car le code $MAC_j$ dépend de la donnée $D_j$.

L'utilisation d'un « OU exclusif » pour mettre à jour le code $EDC_m$ permet une mise à jour de ce code de manière itérative, ce qui est bien plus rapide que de calculer, à chaque écriture d'une nouvelle ligne de code, le nouveau code $EDC_m$ à partir du contenu de chacune des lignes contenues dans le bloc $BD_m$.

Utiliser un code correcteur d'erreur en tant que code $ECC_{Dj}$ permet, en plus, de corriger une erreur détectée. Cela permet donc de poursuivre l'exécution de la fonction sécurisée même si une erreur a été signalée.

Enregistrer le code $EDC_m$ dans la mémoire 29 accroît la sécurité du procédé car cette mémoire est très difficilement modifiable par un attaquant.

Le fait de coder à la fois la donnée $D_j$ et le code $ECC_{Dj}$ en le chiffrant à l'aide d'une fonction de chiffrement paramétrée par le vecteur $iv_j$ permet d'accroître la sécurité du procédé. En effet, en plus, la confidentialité de la donnée $D_j$ et du code $ECC_{Dj}$ est assurée.

Le fait d'utiliser en tant que code détecteur d'erreur un code capable de détecter une erreur dans le cryptogramme $CD_j^*$ permet de détecter un déplacement d'une ligne de code sans même avoir à déchiffrer ce cryptogramme $CD_j^*$.

**Revendications**

1. Procédé d'exécution d'un code binaire d'une fonction sécurisée par un microprocesseur, **caractérisé en ce que** ce procédé comporte :

   a) la fourniture (150) du code binaire, ce code binaire comprenant des lignes de code, chaque ligne de code contenant :

   - un cryptogramme ($CI_j^*$, $CD_j^*$) d'une seule instruction exécutable par le microprocesseur ou d'une seule donnée à traiter par le microprocesseur, et
   - un code d'authentification de message ($MAC_j$) permettant de vérifier l'intégrité et l'authenticité du cryptogramme,

   b) lors de l'exécution (152) du code binaire par le microprocesseur, à chaque fois que le microprocesseur charge une ligne de code, le procédé comporte les opérations suivantes :

   1) un module matériel de sécurisation du microprocesseur vérifie (176) l'intégrité et l'authenticité du cryptogramme contenu dans la ligne de code chargée à l'aide du code d'authentification de message contenu dans cette même ligne et déclenche (172) le signalement d'une faute d'exécution si l'intégrité ou l'authenticité du cryptogramme n'est pas confirmée, puis
   2) le module matériel de sécurisation déchiffre (178) le cryptogramme pour obtenir une instruction déchiffrée ou une donnée déchiffrée si l'intégrité et l'authenticité du cryptogramme sont confirmées, puis :

   - dans le cas d'une instruction déchiffrée, l'instruction déchiffrée est enregistrée (180) dans une file d'instructions à exécuter successivement les unes après les autres par une unité arithmétique et logique du microprocesseur, et
   - dans le cas d'une donnée déchiffrée, la donnée déchiffrée est enregistrée (280) dans un registre interne du microprocesseur en attendant d'être traitée par l'unité arithmétique et logique, et

   dans lequel :

   - lors de l'étape a), le cryptogramme contenu dans la ligne de code est un cryptogramme d'une concaténation :

   - de ladite instruction ou donnée, et
   - d'un premier code détecteur d'erreur ($ECC_{Ij}$, $ECC_{Dj}$) permettant de détecter une erreur dans l'instruction ou dans la donnée avec laquelle il est concaténé,

   - lors de l'opération 2), le déchiffrement du cryptogramme par le module matériel de sécurisation permet d'obtenir, en plus de l'instruction déchiffrée ou de la donnée déchiffrée, le premier code détecteur d'erreur déchiffré, puis :

   - dans le cas d'une instruction déchiffrée, le premier code d'erreur déchiffré est enregistré (180) dans la file d'instructions avec l'instruction déchiffrée, et
   - dans le cas d'une donnée déchiffrée, la donnée déchiffrée et le premier code détecteur d'erreur déchiffré sont enregistrés (280) dans un même registre du microprocesseur, et

   - après l'opération 2), le procédé comporte l'opération 3) suivante :

   - lorsque la prochaine instruction à exécuter contenue dans la file d'instructions est l'instruction déchiffrée lors de l'opération 2), le module matériel de sécurisation vérifie (184), à l'aide du premier code détecteur d'erreur enregistré avec cette instruction déchiffrée, s'il existe une erreur dans cette instruction déchiffrée, et, dans le cas où une telle erreur est détectée dans cette instruction déchiffrée, le module matériel de sécurisation déclenche (172) le signalement d'un faute d'exécution, et, dans le cas où aucune erreur n'a été détectée dans cette instruction déchiffrée, le microprocesseur décode l'instruction déchiffrée et la transmet à l'unité arithmétique et logique qui l'exécute (190), ou

- lorsque la prochaine donnée à traiter par l'unité arithmétique et logique est la donnée déchiffrée lors de l'opération 2), le module matériel de sécurisation vérifie (284), à l'aide du premier code détecteur d'erreur enregistré associé à cette donnée déchiffrée, s'il existe une erreur dans cette donnée déchiffrée, et, dans le cas où une telle erreur est détectée, le module matériel de sécurisation déclenche (172) le signalement d'une faute d'exécution, et, dans le cas où aucune erreur n'est détectée, l'unité arithmétique et logique traite (190) cette donnée déchiffrée.

2. Procédé selon la revendication 1, dans lequel :

- lors de l'étape a), le premier code détecteur d'erreur (ECC$_{Ij}$, ECC$_{Dj}$) est un code correcteur d'erreur permettant, en plus, de corriger l'erreur détectée dans l'instruction ou dans la donnée avec laquelle il est concaténé,
- lors de l'opération 3) :

    - lorsque le module matériel de sécurisation détecte une erreur dans l'instruction déchiffrée, en plus de déclencher le signalement d'une faute d'exécution, le module matériel de sécurisation corrige (186) cette erreur à l'aide du premier code détecteur d'erreur déchiffré enregistré ensemble avec cette instruction déchiffrée, puis le microprocesseur décode l'instruction ainsi corrigée et la transmet à l'unité arithmétique et logique qui l'exécute (190), ou
    - lorsque le module matériel de sécurisation détecte une erreur dans la donnée déchiffrée, en plus de déclencher le signalement d'une faute d'exécution, le module matériel de sécurisation corrige (286) cette erreur à l'aide du premier code détecteur d'erreur déchiffré associé à cette donnée déchiffrée, puis l'unité arithmétique et logique traite (190) la donnée corrigée.

3. Procédé selon l'une quelconque des revendications précédentes, dans lequel :

    - lors de l'étape a), chaque ligne de code comprend, en plus du cryptogramme et du code d'authentification de message, un second code détecteur d'erreur (ECC$_{Lj}$) permettant de détecter une erreur dans le cryptogramme ou le code d'authentification de message contenu dans la même ligne de code,

- lors de l'étape b) avant l'exécution de l'opération 1), le procédé comporte une opération (170, 270) lors de laquelle le module matériel de sécurisation vérifie, à l'aide du second code détecteur d'erreur contenu dans la ligne de code chargée, s'il existe une erreur dans le cryptogramme ou le code d'authentification de message contenu dans la ligne de code chargée, et dans le cas où une telle erreur est détectée, le module matériel de sécurisation déclenche (172) le signalement d'une faute d'exécution et, dans le cas où aucune erreur n'est détectée, le procédé se poursuit par l'opération 1).

4. Procédé selon la revendication 3, dans lequel :

    - lors de l'étape a), le second code détecteur d'erreur (ECC$_{Lj}$) est un code correcteur d'erreur permettant, en plus, de corriger l'erreur détectée dans le cryptogramme ou le code d'authentification de message contenu dans la même ligne de code,
    - si le module matériel de sécurisation détecte une erreur dans le cryptogramme ou le code d'authentification de message, en plus de déclencher le signalement d'une faute d'exécution, le module matériel de sécurisation corrige (174, 274) cette erreur à l'aide du second code détecteur d'erreur, puis le procédé se poursuit par l'opération 1) lors de laquelle ce sont le cryptogramme corrigé et le code d'authentification de message corrigé qui sont utilisés.

5. Procédé selon l'une quelconque des revendications précédentes, dans lequel :

    - lors de l'opération 1), une première clé de chiffrement (k') est utilisée pour vérifier l'authenticité du cryptogramme contenu dans la ligne de code chargée, et
    - lors de l'opération 2), une seconde clé de déchiffrement (ka) est utilisée pour déchiffrer le cryptogramme, cette seconde clé de déchiffrement étant différente de la première clé de déchiffrement.

6. Procédé selon la revendication 1, dans lequel :

    - lors de l'étape a), le code binaire fourni comporte un code machine contenant une succession de blocs de base dans lequel :

        - chaque bloc de base comporte une succession de lignes de code contenant chacune le cryptogramme d'une instruction, les instructions chiffrées dans ces lignes de code successives étant destinées à être exécutées par le microprocesseur systématiquement dans l'ordre de ces lignes de code, et

- chaque bloc de base débute à une adresse de branchement et se termine par une ligne de code contenant le cryptogramme d'une instruction de branchement vers une adresse de branchement d'un autre bloc de base, cet autre bloc de base étant appelé « le bloc de base suivant » et le bloc de base qui se termine par la ligne de code contenant le cryptogramme de cette instruction de branchement vers ce bloc de base suivant étant appelé « bloc de base précédent »,

- le cryptogramme contenu dans une ligne de code spécifique d'un bloc de base suivant ayant été obtenu à l'aide d'un vecteur d'initialisation différent des vecteurs d'initialisation utilisés pour obtenir les cryptogrammes de lignes de code des autres blocs de base,

- chaque bloc de base précédent comportant une ligne de code contenant le cryptogramme d'une instruction de chargement qui, lorsqu'elle est exécutée par le microprocesseur, provoque le chargement dans le microprocesseur du vecteur d'initialisation à utiliser pour déchiffrer le cryptogramme de la ligne de code spécifique du bloc de base suivant,

- lors de l'opération 2), le module matériel de sécurisation déchiffre (178) le cryptogramme de la ligne de code spécifique d'un bloc de base suivant à l'aide du vecteur d'initialisation chargé dans le microprocesseur lors de l'exécution du bloc de base précédent.

**7.** Procédé selon la revendication 6, dans lequel :

- lors de l'étape a), le code binaire comporte un code machine contenant :

- un bloc de base appelé « bloc appelant » qui se termine par une ligne de code contenant le cryptogramme d'une instruction de branchement qui, lorsqu'elle est exécutée par le microprocesseur, réalise un branchement vers une adresse de branchement d'une sous-fonction sécurisée,

- un autre bloc de base appelé « bloc de retour », et

- la sous-fonction sécurisée formée par un ou plusieurs blocs de base, cette sous-fonction sécurisée étant appelable à partir des différents blocs de base de la fonction sécurisée et débutant, par un premier bloc de base et se terminant par un dernier bloc de base, le premier bloc de base débute à l'adresse de branchement de la sous-fonction sécurisée et le dernier bloc de base se termine par une ligne de code contenant le cryptogramme d'une instruction de branchement particulière appelée « instruction de retour » qui, lorsqu'elle est exécutée par le microprocesseur, réalise un branchement vers l'adresse de branchement du bloc de retour,

- lors d'une première exécution de l'opération 2), le module matériel de sécurisation enregistre dans un premier registre du microprocesseur l'adresse de branchement du bloc de retour et le vecteur d'initialisation nécessaire pour déchiffrer ce bloc de retour, puis

- lors d'une deuxième exécution de l'opération 2) lors de laquelle l'instruction de retour de la sous-fonction sécurisée est déchiffrée, l'adresse de branchement utilisée pour l'exécution de l'instruction de retour est lue dans le premier registre, puis

- lors d'une troisième exécution de l'opération 2) lors de laquelle la ligne de code spécifique du bloc de retour est déchiffrée, le module matériel de sécurisation utilise le vecteur d'initialisation enregistré dans le premier registre pour déchiffrer le cryptogramme de la ligne de code spécifique du bloc de retour.

**8.** Procédé selon l'une quelconque des revendications précédentes, dans lequel :

- avant l'étape b), le procédé comporte l'enregistrement :

- d'un premier certificat cryptographique ($C_{OS}$) permettant d'authentifier une clé publique d'un système d'exploitation exécuté par le microprocesseur,

- d'un deuxième certificat cryptographique ($C_{CPU}$) permettant d'authentifier une clé publique du microprocesseur,

- d'un troisième certificat cryptographique ($C_{aut}$) permettant d'authentifier une clé publique de l'auteur de la fonction sécurisée,

- un cryptogramme ($ka^*$) d'une clé d'application déchiffrable à l'aide de la clé publique du microprocesseur,

- une signature ($S_{ka^*}$) de la clé d'application vérifiable à l'aide de la clé publique de l'auteur,

- au début de l'étape b) le module matériel de sécurisation vérifie (154) dans l'ordre :

- l'authenticité (156, 158) du premier et du troisième certificat cryptographique à l'aide de la clé publique du système d'exploitation,

- seulement si l'authenticité de la clé publique de l'auteur a été confirmée, l'authenticité (160) de la signature de la clé d'application à l'aide de la clé publique de l'auteur,
- seulement si l'authenticité de la signature de la clé d'application a été confirmée, le déchiffrement (162) du cryptogramme de la clé d'application avec la clé publique du microprocesseur, puis

- lors de l'opération 2), le déchiffrement du cryptogramme est réalisé à l'aide de cette clé d'application déchiffrée.

**9.** Procédé selon l'une quelconque des revendications précédentes, dans lequel, lors de l'opération 1) (178, 278), le module matériel de sécurisation :

- construit une étiquette à partir du cryptogramme contenu dans la ligne de code chargée, puis
- chiffre l'étiquette construite à l'aide d'une clé secrète enregistrée dans une mémoire non volatile du module matériel de sécurisation, puis
- compare l'étiquette chiffrée au code d'authentification de message contenu dans la ligne de code chargée, puis
- confirme l'intégrité et l'authenticité du cryptogramme seulement si l'étiquette chiffrée est identique à ce code d'authentification de message.

**10.** Procédé selon l'une quelconque des revendications précédentes, dans lequel :

- lors de l'étape a) (150), le code binaire fourni contient :

- une instruction arithmétique et logique comportant un opcode et un ou plusieurs opérandes qui, lorsqu'elle est exécutée par une unité arithmétique et logique du microprocesseur, provoque la réalisation de l'opération $D_1 * D_2 * ... * D_n$ et l'enregistrement du résultat de cette opération dans un registre $R_{res}$, où :

- $D_1$ à $D_n$ sont des données enregistrées, respectivement, dans des registres $R_1$ à $R_n$ du microprocesseur,
- les registres $R_1$ à $R_n$ sont les registres désignés par les opérandes de l'instruction arithmétique et logique,
- le symbole « * » est l'opération arithmétique et logique désignée par l'opcode de l'instruction arithmétique et logique, et
- l'indice n est un entier supérieur ou égal à un,

- pour chaque registre $R_1$ à $R_n$, une instruction de chargement qui, lorsqu'elle est exécutée par le microprocesseur, provoque le chargement d'une donnée $D_i$ dans le registre $R_i$, où l'indice i est un identifiant du registre $R_i$ parmi les registres $R_1$ à $R_n$,

- lors de l'exécution de l'étape b), le procédé comporte les opérations suivantes :

- à chaque fois qu'une instruction de chargement d'une donnée $D_i$ dans le registre $R_i$ est exécutée par le microprocesseur, un module matériel de sécurisation du microprocesseur calcule (202) un code $C_{i,*}$ à l'aide d'une relation $C_{i,*} = F_*(D_i)$, et la donnée chargée $D_i$ est enregistrée dans le registre $R_i$ et le code $C_{i,*}$ calculé est enregistré dans le même registre $R_i$ ou dans un registre associé au registre $R_i$, la fonction $F^*$ étant une fonction préprogrammée du module matériel de sécurisation,

- dans le cas où n est supérieur ou égal à deux, cette fonction $F^*$ étant un homomorphisme d'un ensemble A de nombres munis de l'opération « * » vers un ensemble B de nombres munis de l'opération « # », qui vérifie la relation : $F_*(D_1 * D_2 * ... * D_n) = F_*(D_1) \# F_*(D_2) \# ... \# F_*(D_n) = C_{1,*} \# C_{2,*} \# ... \# C_{n,*}$,
- dans le cas où n est égal à un, cette fonction $F^*$ est telle que $F_*(D_1) = T_*(F_*(D_1))$, où la fonction $T^*$ est une fonction préprogrammée dans le module matériel de sécurisation,

- l'exécution (190) par l'unité arithmétique et logique de l'instruction arithmétique et logique contenue dans le code binaire et l'enregistrement du résultat $D_{res-p}$ de cette exécution dans le registre $R_{res}$, puis
- le module matériel de sécurisation :

- calcule (210, 226) un code $C_{res-p}$ à l'aide de la relation $C_{res-p} = F_*(D_{res-p})$ si n est supérieur à un et, sinon, à l'aide de la relation $C_{res-p} = T_*(D_{res-p})$ si n est égal à un, et
- calcule un code $C_{res-t}$ (218, 224) à l'aide de la relation $C_{res-t} = C_{1,*} \# C_{2,*} \# ... \# C_{n,*}$, puis
- compare (220) les codes $C_{res-p}$ et $C_{res-t}$ et déclenche (172) le signalement d'une faute d'exécution si le code $C_{res-p}$ ne correspond pas au code $C_{res-t}$ et,

dans le cas contraire, inhibe ce signalement.

11. Procédé selon l'une quelconque des revendications précédentes, dans lequel :

- le procédé comporte l'enregistrement (150) dans une mémoire principale à une adresse @$_j$ d'une ligne de code, cette ligne de code contenant :

- une donnée D$_j$ à traiter par le microprocesseur ou un cryptogramme de cette donnée D$_j$, et
- un premier code détecteur d'erreur (EC-C$_{Dj}$, MAC$_j$, ECC$_{Lj}$) permettant de détecter une erreur dans la donnée D$_j$ ou dans son cryptogramme si cette donnée D$_j$ ou son cryptogramme est modifié après son enregistrement dans la mémoire principale, au moins l'un de la donnée D$_j$, de son cryptogramme et du premier code détecteur d'erreur étant chiffré en fonction d'un vecteur d'initialisation iv$_j$, ce vecteur d'initialisation iv$_j$ variant en fonction de l'adresse @$_j$ à laquelle la ligne de code est enregistrée selon une relation iv$_j$ = F$_{iv}$(@$_j$), où la fonction F$_{iv}$ est une fonction préprogrammée d'un module matériel de sécurisation du microprocesseur qui associe un vecteur d'initialisation iv$_j$ différent à chaque adresse @$_j$ différente de la mémoire principale,

- lors de l'exécution (152) du code binaire par le microprocesseur, le procédé comporte les opérations suivantes :

- l'exécution d'une instruction de chargement par le microprocesseur qui provoque le chargement dans les registres du microprocesseur de la ligne de code enregistrée à l'adresse @$_j$, puis
- le module matériel de sécurisation calcule (278) le vecteur d'initialisation iv$_j$ à l'aide de la relation iv$_j$ = F$_{iv}$(@$_j$), où @$_j$ est l'adresse à partir de laquelle la ligne de code a été chargée, puis
- le module matériel de sécurisation déchiffre (278) la ligne de code chargée à l'aide du vecteur d'initialisation iv$_j$ calculé pour obtenir :

- la donnée D$_j$ ou son cryptogramme, et
- le premier code détecteur d'erreur, puis

- le module matériel de sécurisation vérifie (284), à l'aide du premier code détecteur d'erreur obtenu, s'il existe une erreur dans la donnée D$_j$ ou son cryptogramme et, si une telle erreur existe, déclenche (172) le signalement d'une faute d'exécution et, si une telle erreur n'existe pas, inhibe ce signalement d'une faute d'exécution.

12. Code binaire d'une fonction sécurisée exécutable par un microprocesseur pour la mise en œuvre d'un procédé d'exécution conforme à l'une quelconque des revendications précédentes, dans lequel le code binaire comprend des lignes de code, chaque ligne de code contenant :

- un cryptogramme (CI$_j$*, CD$_j$*) d'une seule instruction exécutable par le microprocesseur ou d'une seule donnée à traiter par le microprocesseur,
- un code d'authentification de message (MAC$_j$) permettant de vérifier l'intégrité et l'authenticité du cryptogramme, et dans lequel
- le cryptogramme contenu dans la ligne de code est un cryptogramme d'une concaténation :

• de ladite instruction ou donnée, et
• d'un premier code détecteur d'erreur (ECC$_{Ij}$, ECC$_{Dj}$) permettant de détecter une erreur dans l'instruction ou dans la donnée avec laquelle il est concaténé.

13. Support d'enregistrement d'informations lisibles par un microprocesseur, **caractérisé en ce qu'**il comporte un code binaire conforme à la revendication 12.

14. Microprocesseur (2) pour la mise en œuvre d'un procédé conforme à l'une quelconque des revendications 1 à 11, ce microprocesseur comportant une unité arithmétique et logique (10) et un module matériel de sécurisation (28), **caractérisé en ce que** le module matériel de sécurisation (28) est configuré pour exécuter les opérations 1), 2) et 3) du procédé conforme à la revendication 1.

15. Compilateur (300) apte à transformer automatiquement un code source d'une fonction sécurisée en un code binaire de cette fonction sécurisée, **caractérisé en ce que** le compilateur est apte à transformer automatiquement le code source en un code binaire conforme à revendication 12.

**Patentansprüche**

1. Verfahren zur Ausführung eines Binärcodes einer gesicherten Funktion durch einen Mikroprozessor, **dadurch gekennzeichnet, dass** dieses Verfahren umfasst:

a) die Bereitstellung (150) des Binärcodes, wobei dieser Binärcode Codezeilen umfasst, wobei jede Codezeile enthält:

- ein Kryptogramm ($CI_j^*$, $CD_j^*$) eines einzigen von dem Mikroprozessor ausführbaren Befehls oder eines einzigen vom Mikroprozessor zu verarbeitenden Datenelements und
- einen Nachrichtenauthentifizierungscode ($MAC_j$), der es ermöglicht, die Integrität und die Echtheit des Kryptogramms zu überprüfen,

b) das Verfahren bei der Ausführung (152) des Binärcodes durch den Mikroprozessor jedes Mal dann, wenn der Mikroprozessor eine Codezeile lädt, die folgenden Operationen umfasst:

1) ein Hardware-Sicherungsmodul des Mikroprozessors überprüft (176) die Integrität und die Echtheit des in der geladenen Codezeile enthaltenen Kryptogramms mithilfe des in derselben Zeile enthaltenen Nachrichtenauthentifizierungscodes und löst das Melden eines Ausführungsfehlers aus (172), wenn die Integrität oder die Echtheit des Kryptogramms nicht bestätigt wird, dann

2) das Hardware-Sicherungsmodul entschlüsselt (178) das Kryptogramm, um einen entschlüsselten Befehl oder ein entschlüsseltes Datenelement zu erhalten, wenn die Integrität und die Echtheit des Kryptogramms bestätigt werden, dann:

- im Fall eines entschlüsselten Befehls wird der entschlüsselte Befehl in einer Befehlsdatei mit Befehlen gespeichert (180), die anschließend nacheinander von einer arithmetischen und logischen Einheit des Mikroprozessors auszuführen sind, und
- im Fall eines entschlüsselten Datenelements wird das entschlüsselte Datenelement in einem internen Register des Mikroprozessors gespeichert (280), bis es von der arithmetischen und logischen Einheit verarbeitet wird, und

bei dem:

- beim Schritt a) das in der Codezeile enthaltene Kryptogramm ein Kryptogramm einer Konkatenation ist:

- aus dem Befehl oder Datenelement und

- aus einem ersten Fehlererkennungscode ($ECC_{Ij}$, $ECC_{Dj}$), der es ermöglicht, einen Fehler in dem Befehl oder in dem Datenelement zu erkennen, mit dem er konkateniert ist,

- bei der Operation 2) das Entschlüsseln des Kryptogramms durch das Hardware-Sicherungsmodul es ermöglicht, zusätzlich zum entschlüsselten Befehl oder zum entschlüsselten Datenelement den ersten entschlüsselten Fehlererkennungscode zu erhalten, dann:

- im Fall eines entschlüsselten Befehls der erste entschlüsselte Fehlercode in der Befehlsdatei mit dem entschlüsselten Befehl gespeichert wird (180) und
- im Fall eines entschlüsselten Datenelements das entschlüsselte Datenelement und der erste entschlüsselte Fehlererkennungscode in demselben Register des Mikroprozessors gespeichert werden (280) und

- das Verfahren nach der Operation 2) die folgende Operation 3) umfasst:

- wenn der nächste auszuführende Befehl, der in der Befehlsdatei enthalten ist, der bei der Operation 2) entschlüsselte Befehl ist, überprüft (184) das Hardware-Sicherungsmodul mithilfe des mit diesem entschlüsselten Befehl gespeicherten ersten Fehlererkennungscodes, ob ein Fehler in diesem entschlüsselten Befehl vorliegt, und in dem Fall, in dem ein solcher Fehler in diesem entschlüsselten Befehl erkannt wird, löst das Hardware-Sicherungsmodul das Melden eines Ausführungsfehlers aus (172) und in dem Fall, in dem kein Fehler in diesem entschlüsselten Befehl erkannt wurde, decodiert der Mikroprozessor den entschlüsselten Befehl und übermittelt ihn an die arithmetische und logische Einheit, die ihn ausführt (190), oder
- wenn das nächste von der arithmetischen und logischen Einheit zu verarbeitende Datenelement das bei der Operation 2) entschlüsselte Datenelement ist, überprüft (284) das Hardware-Sicherungsmodul mithilfe des gespeicherten ersten Fehlererkennungscodes, der diesem entschlüsselten Datenelement zugeordnet ist, ob ein Fehler in diesem entschlüsselten Datenelement vorliegt, und in dem Fall, in dem ein solcher Fehler erkannt wird, löst das Hardware-Sicherungsmodul das Melden eines Ausführungsfehlers aus (172) und in dem Fall, in dem kein Fehler erkannt wurde, verarbeitet (190) die arithmetische und logische Einheit dieses entschlüsselte Datenelement.

**2.** Verfahren nach Anspruch 1, bei dem:

- beim Schritt a) der erste Fehlererkennungscode (ECC$_{Ij}$, ECC$_{Dj}$) ein Fehlererkennungscode ist, der es zusätzlich ermöglicht, den Fehler, der in dem Befehl oder dem Datum erkannt wurde, mit dem er konkateniert ist, zu korrigieren,
- bei der Operation 3):

  - wenn das Hardware-Sicherungsmodul einen Fehler in dem entschlüsselten Befehl erkennt, das Hardware-Sicherungsmodul zusätzlich zum Melden eines Ausführungsfehlers diesen Fehler mithilfe des entschlüsselten ersten Fehlererkennungscodes, der gemeinsam mit diesem entschlüsselten Befehl gespeichert wurde, korrigiert (186), der Mikroprozessor dann den so korrigierten Befehl decodiert und an die arithmetische und logische Einheit übermittelt, die ihn ausführt (190), oder
  - wenn das Hardware-Sicherungsmodul einen Fehler in dem entschlüsselten Datenelement erkennt, das Hardware-Sicherungsmodul zusätzlich zum Melden eines Ausführungsfehlers diesen Fehler mithilfe des entschlüsselten ersten Fehlererkennungscodes, der diesem entschlüsselten Datenelement zugeordnet ist, korrigiert (286), die arithmetische und logische Einheit dann das korrigierte Datenelement verarbeitet (190).

**3.** Verfahren nach einem der vorhergehenden Ansprüche, bei dem:

- beim Schritt a) jede Codezeile zusätzlich zu dem Kryptogramm und dem Nachrichtenauthentifizierungscode einen zweiten Fehlererkennungscode (ECC$_{Lj}$) umfasst, der es ermöglicht, einen Fehler in dem in derselben Codezeile enthaltenen Kryptogramm oder Nachrichtenauthentifizierungscode zu erkennen,
- das Verfahren beim Schritt b) vor dem Ausführen der Operation 1) eine Operation (170, 270) umfasst, bei der das Hardware-Sicherungsmodul mithilfe des in der geladenen Codezeile enthaltenen zweiten Fehlererkennungscodes überprüft, ob ein Fehler in dem in der geladenen Codezeile enthaltenen Kryptogramm oder Nachrichtenauthentifizierungscode vorliegt, und das Hardware-Sicherungsmodul in dem Fall, in dem ein solcher Fehler erkannt wird, das Melden eines Ausführungsfehlers auslöst (172) und das Verfahren in dem Fall, in dem kein Fehler erkannt wird, mit der Operation 1) fortgesetzt wird.

**4.** Verfahren nach Anspruch 3, bei dem:

- beim Schritt a) der zweite Fehlererkennungscode (ECC$_{Lj}$) ein Fehlererkennungscode ist, der es zusätzlich ermöglicht, den Fehler, der in dem in derselben Codezeile enthaltenen Kryptogramm oder Nachrichtenauthentifizierungscode erkannt wurde, zu korrigieren,
- wenn das Hardware-Sicherungsmodul einen Fehler in dem Kryptogramm oder Nachrichtenauthentifizierungscode erkennt, das Hardware-Sicherheitsmodul zusätzlich zum Auslösen des Meldens eines Ausführungsfehlers diesen Fehler mithilfe des zweiten Fehlererkennungscodes korrigiert (174, 274), das Verfahren dann mit der Operation 1) fortgesetzt wird, bei der das korrigierte Kryptogramm und der korrigierte Nachrichtenauthentifizierungscode verwendet werden.

**5.** Verfahren nach einem der vorhergehenden Ansprüche, bei dem:

- bei der Operation 1) ein erster Verschlüsselungsschlüssel (k') verwendet wird, um die Echtheit des in der geladenen Codezeile enthaltenen Kryptogramms zu überprüfen, und
- bei der Operation 2) ein zweiter Entschlüsselungsschlüssel (ka) verwendet wird, um das Kryptogramm zu entschlüsseln, wobei dieser zweite Entschlüsselungsschlüssel von dem ersten Entschlüsselungsschlüssel verschieden ist.

**6.** Verfahren nach Anspruch 1, bei dem:

- beim Schritt a) der bereitgestellte Binärcode einen Maschinencode umfasst, der eine Folge von Basisblöcken enthält, bei dem:

  - jeder Basisblock eine Folge von Codezeilen umfasst, die jeweils das Kryptogramm eines Befehls enthalten, wobei die verschlüsselten Befehle in diesen aufeinander folgenden Codezeilen dazu bestimmt sind, von dem Mikroprozessor systematisch in der Reihenfolge dieser Codezeilen ausgeführt zu werden, und
  - jeder Basisblock mit einer Verzweigungsadresse beginnt und mit einer Codezeile endet, die das Kryptogramm eines Verzweigungsbefehls zu einer Verzweigungsadresse eines anderen Basisblocks enthält, wobei dieser andere Basisblock "folgender Basisblock" genannt wird, und der Basisblock, der mit der Codezeile endet, die das Kryptogramm dieses Verzweigungsbefehls zum folgenden Basisblock enthält, "vorhergehender Basisblock" genannt wird,

- das in einer spezifischen Codezeile eines folgenden Basisblocks enthaltene Kryptogramm mithilfe eines Initialisierungsvektors erhalten worden ist, der verschieden von den Initialisierungsvektoren ist, die zum Erhalten der Kryptogramme von Codezeilen der anderen Basisblöcke verwendet wurden,

- jeder vorhergehende Basisblock eine Codezeile umfasst, die das Kryptogramm eines Ladebefehls enthält, der, wenn er von dem Mikroprozessor ausgeführt wird, das Laden des zum Entschlüsseln des Kryptogramms der spezifischen Codezeile des folgenden Basisblocks zu verwendenden Initialisierungsvektors bewirkt,

- bei der Operation 2) das Hardware-Sicherungsmodul das Kryptogramm der spezifischen Codezeile eines folgenden Basisblocks mithilfe des Initialisierungsvektors entschlüsselt (178), der bei der Ausführung des vorhergehenden Basisblocks in den Mikroprozessor geladen wurde.

7. Verfahren nach Anspruch 6, bei dem:

- beim Schritt a) der Binärcode einen Maschinencode umfasst, der enthält:

- einen Basisblock, "aufrufender Block" genannt, der mit einer Codezeile endet, die das Kryptogramm eines Verzweigungsbefehls enthält, der, wenn er vom Mikroprozessor ausgeführt wird, eine Verzweigung zu einer Verzweigungsadresse einer gesicherten Unterfunktion ausführt,

- einen weiteren Basisblock, "Rückkehrblock" genannt, und

- die gesicherte Unterfunktion, die aus einem oder mehreren Basisblöcken gebildet wird, wobei diese gesicherte Unterfunktion von verschiedenen Basisblöcken der gesicherten Funktion aus aufrufbar ist und mit einem ersten Basisblock beginnt und mit einem letzten Basisblock endet, wobei der erste Basisblock an der Verzweigungsadresse der gesicherten Unterfunktion beginnt und der letzte Basisblock mit einer Codezeile endet, die das Kryptogramm eines besonderen Verzweigungsbefehls, "Rückkehrbefehl" genannt, enthält, der, wenn er von dem Mikroprozessor ausgeführt wird, eine Verzweigung zu der Verzweigungsadresse des Rückkehrblocks ausführt,

- bei einer ersten Ausführung der Operation 2) das Hardware-Sicherungsmodul in einem ersten Register des Mikroprozessors die Verzweigungsadresse des Rückkehrblocks und den zum Entschlüsseln dieses Rückkehrblocks erforderlichen Initialisierungsvektors speichert, dann

- bei einer zweiten Ausführung der Operation 2), bei welcher der Rückkehrbefehl der gesicherten Unterfunktion entschlüsselt wird, die zur Ausführung des Rückkehrbefehls verwendete Verzweigungsadresse in dem ersten Register gelesen wird, dann

- bei einer dritten Ausführung der Operation 2), bei der die spezifische Codezeile des Rückkehrblocks entschlüsselt wird, das Hardware-Sicherungsmodul den im ersten Register gespeicherten Initialisierungsvektor verwendet, um das Kryptogramm der spezifischen Codezeile des Rückkehrblocks zu entschlüsseln.

8. Verfahren nach einem der vorhergehenden Ansprüche, bei dem:

- das Verfahren vor dem Schritt b) das Speichern umfasst:

- eines ersten kryptografischen Zertifikats ($C_{OS}$), das es ermöglicht, einen öffentlichen Schlüssel eines vom Mikroprozessor ausgeführten Betriebssystems zu authentifizieren,

- eines zweiten kryptografischen Zertifikats ($C_{CPU}$), das es ermöglicht, einen öffentlichen Schlüssel des Mikroprozessors zu authentifizieren,

- eines dritten kryptografischen Zertifikats ($C_{aut}$), das es ermöglicht, einen öffentlichen Schlüssel des Autors der sicheren Funktion zu authentifizieren,

- eines Kryptogramms ($ka^*$) eines Anwendungsschlüssels, der mithilfe des öffentlichen Schlüssels des Mikroprozessors entschlüsselbar ist,

- einer Signatur ($S_{ka^*}$) des Anwendungsschlüssels, die mithilfe des öffentlichen Schlüssels des Autors überprüfbar ist,

- das Hardware-Sicherungsmodul zu Beginn des Schritts b) in der Reihenfolge überprüft (154):

- die Echtheit (156, 158) des ersten und des dritten kryptografischen Zertifikats mithilfe des öffentlichen Schlüssels des Betriebssystems,

- nur dann, wenn die Echtheit des öffentlichen Schlüssels des Autors bestätigt worden ist, die Echtheit (160) der Signatur des Anwendungsschlüssels mithilfe des öffentlichen Schlüssels des Autors,
- nur dann, wenn die Echtheit der Signatur des Anwendungsschlüssels bestätigt worden ist, das Entschlüsseln (162) des Kryptogramms des Anwendungsschlüssels mit dem öffentlichen Schlüssel des Mikroprozessors, dann

- bei der Operation 2) das Entschlüsseln des Kryptogramms mithilfe dieses entschlüsselten Anwendungsschlüssels ausgeführt wird.

9. Verfahren nach einem der vorhergehenden Ansprüche, bei dem das Hardware-Sicherungsmodul beim Schritt 1) (178, 278):

- anhand des in der geladenen Codezeile enthaltenen Kryptogramms ein Etikett erstellt, dann
- das erstellte Etikett mithilfe eines geheimen Schlüssels, der in einem nichtflüchtigen Speicher des Hardware-Sicherungsmoduls gespeichert ist, verschlüsselt, dann
- das verschlüsselte Etikett mit dem in der geladenen Codezeile enthaltenen Nachrichtenauthentifizierungscode vergleicht, dann
- die Integrität und die Echtheit des Kryptogramms nur dann bestätigt, wenn das verschlüsselte Etikett mit diesem Nachrichtenauthentifizierungscode identisch ist.

10. Verfahren nach einem der vorhergehenden Ansprüche, bei dem:

- beim Schritt a) der bereitgestellte Binärcode (150) enthält:

- einen arithmetischen und logischen Befehl, der einen Opcode und einen oder mehrere Operanden umfasst und der, wenn er von einer arithmetischen und logischen Einheit ausgeführt wird, die Ausführung der Operation $D_1 * D_2 * ... * D_n$ und das Speichern des Ergebnisses dieser Operation in einem Register $R_{res}$ bewirkt, wobei:

- $D_1$ bis $D_n$ Datenelemente sind, die jeweils in Registern $R_1$ bis $R_n$ des Mikroprozessors gespeichert sind,
- die Register $R_1$ bis $R_n$ die Register sind, die durch die Operanden des arithmetischen und logischen Befehls bezeichnet werden,
- das Symbol "*" die arithmetische und logische Operation ist, die durch den Opcode des arithmetischen und logischen Befehls bezeichnet wird, und

- der Index n eine ganze Zahl größer oder gleich eins ist,

- für jedes Register $R_1$ bis $R_n$ einen Ladebefehl, der, wenn er von dem Mikroprozessor ausgeführt wird, das Laden eines Datenelements $D_i$ in das Register $R_i$ bewirkt, wobei der Index i ein Identifikator des Registers R unter den Registern $R_1$ bis $R_n$ ist,

- das Verfahren bei der Ausführung des Schritts b) die folgenden Operationen umfasst:

- jedes Mal dann, wenn ein Ladebefehl zum Laden eines Datenelements $D_i$ in das Register $R_i$ von dem Mikroprozessor ausgeführt wird, berechnet (202) ein Hardware-Sicherungsmodul des Mikroprozessors einen Code $C_{i,*}$ mithilfe einer Gleichung $C_{i,*} = F_*(D_i)$ und wird das geladene Datenelement $D_i$ im Register $R_i$ gespeichert und der berechnete Code $C_{i,*}$ in demselben Register $R_i$ oder in einem dem Register $R_i$ zugeordneten Register gespeichert, wobei die Funktion F* eine vorprogrammierte Funktion des Hardware-Sicherungsmoduls ist,

- wobei in dem Fall, in dem n größer oder gleich zwei ist, diese Funktion F* ein Homomorphismus einer Menge A von Zahlen, die mit der Operation "*" versehen sind, in eine Menge B von Zahlen, die mit der Operation "#" versehen sind, ist, für den die folgende Gleichung gilt: $F_*(D_1 * D_2 * ... * D_n) = F_*(D_1) \# F_*(D_2) \# ... \# F_*(D_n) = C_{1,*} \# C_{2,*} \# ... \# C_{n,*}$,
- in dem Fall, in dem n gleich eins ist, diese Funktion F* dergestalt ist, dass $F_*(D_1) = T_*(F_*(D_1))$, wobei die Funktion T* eine im Hardware-Sicherungsmodul vorprogrammierte Funktion ist,

- die Ausführung (190) des im Binärcode enthaltenen arithmetischen und logischen Befehls durch die arithmetische und logische Einheit und das Speichern des Ergebnisses $D_{res-p}$ dieser Ausführung im Register $R_{res}$, dann
- das Hardware-Sicherungsmodul:

- einen Code $C_{res-p}$ mithilfe der Gleichung $C_{res-p} = F_*(D_{res-p})$, wenn n größer als eins ist, und ansonsten mithilfe der Gleichung $C_{res-p} = T_*(D_{res\_p})$, wenn n gleich eins ist, berechnet (210, 226) und
- einen Code $C_{res-t}$ (218, 224) mithilfe

der Gleichung $C_{res-t} = C_{1,*} \# C_{2,*} \# ... \# C_{n,*}$ berechnet, dann
- die Codes $C_{res-p}$ und $C_{res-t}$ vergleicht (220) und das Melden eines Ausführungsfehlers auslöst (172), wenn der Code $C_{res\_p}$ nicht mit dem Code $C_{res-t}$ übereinstimmt, und im gegenteiligen Fall dieses Melden unterlässt.

11. Verfahren nach einem der vorhergehenden Ansprüche, bei dem:

- das Verfahren das Speichern (150) einer Codezeile in einem Hauptspeicher an einer Adresse $@_j$ umfasst, wobei diese Codezeile enthält:

- ein Datenelement $D_j$, das vom Mikroprozessor zu verarbeiten ist, oder ein Kryptogramm dieses Datenelements $D_j$ und
- einen ersten Fehlererkennungscode (EC-$C_{Dj}$, $MAC_j$, $ECC_{Lj}$), der es ermöglicht, einen Fehler in dem Datenelement $D_j$ oder in seinem Kryptogramm zu erkennen, wenn dieses Datenelement $D_j$ oder sein Kryptogramm nach seinem Speichern im Hauptspeicher geändert wird,
wobei unter dem Datenelement $D_j$, seinem Kryptogramm und dem ersten Fehlererkennungscode mindestens eines bzw. einer in Abhängigkeit von einem Initialisierungsvektor $iv_j$ verschlüsselt ist, wobei dieser Initialisierungsvektor $iv_j$ in Abhängigkeit von der Adresse $@_j$, an der die Codezeile gespeichert ist, gemäß einer Gleichung $iv_j = F_{iv}(@_j)$ variiert, wobei die Funktion $F_{iv}$ eine vorprogrammierte Funktion eines Hardware-Sicherungsmodul des Mikroprozessors ist, die jeder unterschiedlichen Adresse $@_j$ des Hauptspeichers einen anderen Initialisierungsvektor $iv_j$ zuordnet,

- bei der Ausführung (152) des Binärcodes durch den Mikroprozessor das Verfahren die folgenden Operationen umfasst:

- das Ausführen eines Ladebefehls durch den Mikroprozessor, der das Laden der in den Registern des Mikroprozessors an der Adresse $@_j$ gespeicherten Codezeile bewirkt, dann
- das Hardware-Sicherungsmodul berechnet (278) den Initialisierungsvektor $iv_j$ mithilfe der Gleichung $iv_j = F_{iv}(@_j)$, wobei $@_j$ die Adresse ist, von der aus die Codezeile geladen worden ist, dann
- das Hardware-Sicherungsmodul entschlüsselt (278) die geladene Codezeile mithilfe des berechneten Initialisierungsvektors $iv_j$, um zu erhalten:

- das Datenelement $D_j$ oder sein Kryptogramm und
- den ersten Fehlererkennungscode, dann

- das Hardware-Sicherungsmodul überprüft (284) mithilfe des erhaltenen ersten Fehlererkennungscodes, ob ein Fehler im Datenelement $D_j$ oder seinem Kryptogramm vorliegt, und löst, wenn ein solcher Fehler vorliegt, das Melden eines Ausführungsfehlers aus (172) und unterlässt dieses Melden eines Ausführungsfehlers, wenn ein solcher Fehler nicht vorliegt.

12. Binärcode einer sicheren Funktion, der von einem Mikroprozessor zur Implementierung eines Ausführungsverfahren nach einem der vorhergehenden Ansprüche ausführbar ist, wobei der Binärcode Codezeilen umfasst, wobei jede Codezeile enthält:

- ein Kryptogramm ($CI_j^*$, $CD_j^*$) eines einzigen vom Mikroprozessor ausführbaren Befehls oder eines einzigen vom Mikroprozessor zu verarbeitenden Datenelements,
- einen Nachrichtenauthentifizierungscode ($MAC_j$), der es ermöglicht, die Integrität und die Echtheit des Kryptogramms zu überprüfen, und bei dem
- das in der Codezeile enthaltene Kryptogramm ein Kryptogramm ist einer Konkatenation:

• aus dem Befehl oder Datenelement und
• aus einem ersten Fehlererkennungscode ($ECC_{Ij}$, $ECC_{Dj}$), der es ermöglicht, einen Fehler in dem Befehl oder in dem Datenelement zu erkennen, mit dem er konkateniert ist.

13. Speichermedium für von einem Mikroprozessor lesbare Informationen, **dadurch gekennzeichnet, dass** es einen Binärcode nach Anspruch 12 umfasst.

14. Mikroprozessor (2) zur Implementierung eines Verfahrens nach einem der Ansprüche 1 bis 11, wobei dieser Mikroprozessor eine arithmetische und logische Einheit (10) und ein Hardware-Sicherungsmodul (28) umfasst, **dadurch gekennzeichnet, dass** das Hardware-Sicherungsmodul (28) zum Ausführen der Operationen 1), 2) und 3) des Verfahrens nach Anspruch 1 konfiguriert ist.

15. Compiler (300), der geeignet ist, einen Quellcode einer sicheren Funktion automatisch in einen Binärcode dieser sicheren Funktion umzuwandeln, **dadurch gekennzeichnet, dass** der Compiler geeignet ist, den Quellcode automatisch in einen Binärcode nach Anspruch 12 umzuwandeln.

## Claims

1. Method for executing a binary code of a secure function with a microprocessor, **characterized in that** this method comprises:

   a) providing (150) the binary code, this binary code including lines of code, each line of code containing:

   - a cryptogram ($CI_j^*$, $CD_j^*$) of a single instruction executable by the microprocessor or of a single datum to be processed by the microprocessor, and
   - a message authentication code ($MAC_j$) allowing the integrity and authenticity of the cryptogram to be verified,

   b) in the execution (152) of the binary code by the microprocessor, each time the microprocessor loads a line of code, the method includes the following operations:

   1) a hardware security module of the microprocessor verifies (176) the integrity and authenticity of the cryptogram contained in the loaded line of code using the message authentication code contained in the same line and triggers (172) the indication of an execution fault if the integrity or authenticity of the cryptogram is not confirmed, then
   2) the hardware security module decrypts (178) the cryptogram in order to obtain a decrypted instruction or a decrypted datum if the integrity and authenticity of the cryptogram are confirmed, then:

   - in the case of a decrypted instruction, the decrypted instruction is stored (180) in a file of instructions to be successively executed one after the other by an arithmetic logic unit of the microprocessor, and
   - in the case of a decrypted datum, the decrypted datum is stored (280) in an internal register of the microprocessor while waiting to be processed by the arithmetic logic unit, and

   wherein:

   - in step a), the cryptogram contained in the line of code is a cryptogram of a concatenation:

   - of said instruction or datum, and
   - of a first error-detecting code ($ECC_{Ij}$, $ECC_{Dj}$) allowing an error to be detected in the instruction or in the datum with which it is concatenated,
   - in operation 2), the decryption of the cryptogram by the hardware security module allows, in addition to the decrypted instruction or the decrypted datum, the decrypted first error-detecting code to be obtained, then:

   - in the case of a decrypted instruction, the decrypted first error code is stored (180) in the file of instructions with the decrypted instruction, and
   - in the case of a decrypted datum, the decrypted datum and the decrypted first error-detecting code are stored (280) in the same register of the microprocessor, and

   - after operation 2), the method includes the following operation 3):

   - when the next instruction to be executed contained in the file of instructions is the instruction decrypted in operation 2), the hardware security module verifies (184), using the first error-detecting code stored with this decrypted instruction, whether there is an error in this decrypted instruction, and, in the case where such an error is detected in this decrypted instruction, the hardware security module triggers (172) the indication of an execution fault, and, in the case where no error is detected in this decrypted instruction, the microprocessor decodes the decrypted instruction and transmits it to the arithmetic logic unit that executes it (190), or
   - when the next datum to be processed by the arithmetic logic unit is the datum decrypted in operation 2), the hardware security module verifies (284), using the stored first error-detecting code associated with this decrypted datum, whether there is an error in this decrypted datum, and, in the case where such an error is detected, the hardware security module triggers (172) the indication of an execution fault, and, in the case where no error is detected, the arithmetic logic unit processes (190) this decrypted datum.

2. Method according to Claim 1, wherein:

   - in step a), the first error-detecting code ($ECC_{Ij}$, $ECC_{Dj}$) is an error-correcting code allowing, in addition, the error detected in the instruction or in the datum with which it is concatenated to be corrected,
- in operation 3):

  - when the hardware security module detects an error in the decrypted instruction, in addition to triggering the indication of an execution fault, the hardware security module corrects (186) this error using the decrypted first error-detecting code stored together with this decrypted instruction, then the microprocessor decodes the instruction thus corrected and transmits it to the arithmetic logic unit that executes it (190), or
  - when the hardware security module detects an error in the decrypted datum, in addition to triggering the indication of an execution fault, the hardware security module corrects (286) this error using the decrypted first error-detecting code associated with this decrypted datum, then the arithmetic logic unit processes (190) the corrected datum.

3. Method according to any one of the preceding claims, wherein:

  - in step a), each line of code comprises, in addition to the cryptogram and the message authentication code, a second error-detecting code ($ECC_{Lj}$) allowing an error to be detected in the cryptogram or the message authentication code contained in the same line of code,
  - in step b) before the execution of operation 1), the method comprises an operation (170, 270) in which the hardware security module verifies, using the second error-detecting code contained in the loaded line of code, whether there is an error in the cryptogram or the message authentication code contained in the loaded line of code, and in the case where such an error is detected, the hardware security module triggers (172) the indication of an execution fault and, in the case where no error is detected, the method continues with operation 1).

4. Method according to Claim 3, wherein:

  - in step a), the second error-detecting code ($ECC_{Lj}$) is an error-correcting code allowing, in addition, the error detected in the cryptogram or the message authentication code contained in the same line of code to be corrected,
  - if the hardware security module detects an error in the cryptogram or the message authentication code, in addition to triggering the indication of an execution fault, the hardware security module corrects (174, 274) this error using the second error-detecting code, then the method continues with operation 1) in which it is the corrected cryptogram and the corrected message authentication code that are used.

5. Method according to any one of the preceding claims, wherein:

  - in operation 1), a first encryption key (k') is used to verify the authenticity of the cryptogram contained in the loaded line of code, and
  - in operation 2), a second decryption key (ka) is used to decrypt the cryptogram, this second decryption key being different from the first decryption key.

6. Method according to Claim 1, wherein:

  - in step a), the provided binary code comprises a machine code containing a succession of basic blocks in which:

    - each basic block comprises a succession of lines of code each containing the cryptogram of an instruction, the instructions encrypted in these successive lines of code being intended to be executed by the microprocessor systematically in the order of these lines of code, and
    - each basic block starts at a branch address and ends with a line of code containing the cryptogram of an instruction to branch to a branch address of another basic block, this other basic block being called "the following basic block" and the basic block that ends with the line of code containing the cryptogram of this instruction to branch to this following basic block being called the "preceding basic block",
    - the cryptogram contained in a specific line of code of a following basic block having been obtained using an initialization vector different from the initialization vectors used to obtain the cryptograms of lines of code of the other basic blocks,
    - each preceding basic block comprising a line of code containing the cryptogram of an instruction that, when it is executed by the microprocessor, causes the loading of the initialization vector to be used to decrypt the cryptogram of the specific line of code of the following basic block to be loaded into the microprocessor,

  - in operation 2), the hardware security module decrypts (178) the cryptogram of the specific line of code of a following basic block using the initialization vector loaded into the microprocessor during the execution of the preceding basic block.

7. Method according to Claim 6, wherein:

- in step a), the binary code comprises a machine code containing:

- a basic block called the "caller block" that ends with a line of code containing the cryptogram of an instruction to branch that, when it is executed by the microprocessor, causes a branch to a branch address of a secure sub-function,
- another basic block called the "return block", and
- the secure sub-function, which is formed by one or more basic blocks, this secure sub-function being callable from various basic blocks of the secure function and starting with a first basic block and ending with a last basic block, the first basic block starting at the branch address of the secure sub-function and the last basic block ending with a line of code containing the cryptogram of a particular instruction to branch called the "return instruction" which, when it is executed by the microprocessor, causes a branch to the branch address of the return block,

- in a first execution of the operation 2), the hardware security module stores, in a first register of the microprocessor, the branch address of the return block and the initialization vector necessary to decrypt this return block, then
- in a second execution of the operation 2) during which the return instruction of the secure sub-function is decrypted, the branch address used for the execution of the return instruction is read from the first register, then
- in a third execution of the operation 2) during which the specific line of code of the return block is decrypted, the hardware security module uses the initialization vector stored in the first register to decrypt the cryptogram of the specific line of code of the return block.

8. Method according to any one of the preceding claims, wherein:

- before step b), the method comprises storing:

- a first cryptographic certificate (Cos) allowing a public key of an operating system executed by the microprocessor to be authenticated,
- a second cryptographic certificate ($C_{CPU}$) allowing a public key of the microprocessor to be authenticated,
- a third cryptographic certificate ($C_{aut}$) allowing a public key of the author of the secure function to be authenticated,
- a cryptogram (ka*) of an application key decryptable using the public key of the microprocessor,
- a signature ($S_{ka*}$) of the application key verifiable using the public key of the author,
- at the start of step b) the hardware security module verifies (154) in order:
- the authenticity (156, 158) of the first and third cryptographic certificates using the public key of the operating system,
- only if the authenticity of the public key of the author has been confirmed, the authenticity (160) of the signature of the application key using the public key of the author,
- only if the authenticity of the signature of the application key has been confirmed, decrypting (162) the cryptogram of the application key with the public key of the microprocessor, then

- in operation 2), the decryption of the cryptogram is carried out using this decrypted application key.

9. Method according to any one of the preceding claims, wherein, in operation 1) (178, 278), the hardware security module:

- constructs a digest from the cryptogram contained in the loaded line of code, then
- encrypts the constructed digest using a secret key stored in a nonvolatile memory of the hardware security module, then
- compares the encrypted digest to the message authentication code contained in the loaded line of code, then
- confirms the integrity and authenticity of the cryptogram only if the encrypted digest is identical to this message authentication code.

10. Method according to any one of the preceding claims, wherein:

- in step a) (150), the provided binary code contains:

- an arithmetic logic instruction comprising an opcode and one or more operands that, when it is executed by an arithmetic logic unit of the microprocessor, causes the operation $D_1*D_2*...*D_n$ to be carried out and the result of this operation to be stored in a register $R_{res}$, where:

- $D_1$ to $D_n$ are data stored in registers $R_1$ to $R_n$ of the microprocessor, respectively,
- the registers $R_1$ to $R_n$ are the registers designated by the operands of the arithmetic logic instruction,
- the symbol "*" is the arithmetic logic operation designated by the opcode of the arithmetic logic instruction, and
- the index n is an integer higher than or equal to one,

- for each register $R_1$ to $R_n$, an instruction to load that, when it is executed by the microprocessor, causes a datum $D_i$ to be loaded into the register $R_i$, where the under i is an identifier of the register $R_i$ among the registers $R_1$ to $R_n$,

- in the execution of step b), the method comprises the following operations:

- each time an instruction to load a datum $D_i$ into the register $R_i$ is executed by the microprocessor, a hardware security module of the microprocessor computes (202) a code $C_{i,*}$ using a relationship $C_{i,*} = F_*(D_i)$, and the loaded datum $D_i$ is stored in the register $R_i$ and the computed code $C_i$, is stored in the same register $R_i$ or in a register associated with the register $R_i$, the function $F^*$ being a preprogrammed function of the hardware security module,

- in the case where n is higher than or equal to two, this function $F^*$ being a homomorphism of a set A of numbers equipped with the operation "*" to a set B of numbers equipped with the operation "#", which respects the relationship: $F_*(D_1 * D_2 * ... * D_n) = F_*(D_1) \# F_*(D2) \# ... \# F_*(D_n) = C_{1,*} \# C_{2,*} \# ... \# C_{n,*}$,
- in the case where n is equal to one, this function $F^*$ is such that $F_*(D_1) = T_*(F_*(D_1))$, where the function $T^*$ is a function preprogrammed into the hardware security module,

- execution (190) by the arithmetic logic unit of the arithmetic logic instruction contained in the binary code and storage of the result $D_{res-p}$ of this execution in the register $R_{res}$, then
- the hardware security module:

- computes (210, 226) a code $C_{res-p}$ using the relationship $C_{res-p} = F_*(D_{res-p})$ if n is higher than one and, otherwise, using the relationship $C_{res-p} = T_*(D_{res-p})$ if n is equal to one, and
- computes a code $C_{res-t}$ (218, 224) using the relationship $C_{res-t} = C_{1,*} \# C_{2,*} \# ... \# C_{n,*}$, then
- compares (220) the codes $C_{res-p}$ and $C_{res-t}$ and triggers (172) the indication of an execution fault if the code $C_{res-p}$ does not correspond to the code $C_{res-t}$ and, in the contrary case, inhibits this indication.

11. Method according to any one of the preceding claims, wherein:

- the method comprises storing (150) in a main memory at an address $@_j$ a line of code, this line of code containing:

- a datum $D_j$ to be processed by the microprocessor or a cryptogram of this datum $D_j$, and
- a first error-detecting code ($ECC_{Dj}$, $MAC_j$, $ECC_{Lj}$) allowing an error in the datum $D_j$ or in its cryptogram to be detected if this datum $D_j$ or its cryptogram is modified after its storage in the main memory, at least one of the datum $D_j$, of its cryptogram and of the first error-detecting code being encrypted dependent on an initialization vector $iv_j$, this initialization vector $iv_j$ varying depending on the address $@_j$ at which the line of code is stored according to a relationship $iv_j = F_{iv}(@_j)$, where the function $F_{iv}$ is a preprogrammed function of a hardware security module of the microprocessor that associates a different initialization vector $iv_j$ with each different address $@_j$ of the main memory,

- in the execution (152) of the binary code by the microprocessor, the method comprises the following operations:

- executing an instruction to load with the microprocessor, which causes the line of code stored at the address $@_j$ to be loaded into the registers of the microprocessor, then
- the hardware security module computes (278) the initialization vector $iv_j$ using the relationship $iv_j = F_{iv}(@_j)$, where $@_j$ is the address from which the line of code was loaded, then
- the hardware security module decrypts (278) the loaded line of code using the computed initialization vector $iv_j$ in order to obtain:

- the datum $D_j$ or its cryptogram, and
- the first error-detecting code, then

- the hardware security module verifies (284), using the obtained first error-detecting code, whether there is an error in the datum $D_j$ or its cryptogram and, if such an error exists, triggers (172) the indication of an execution fault and, if such an error does not exist, inhibits this indication of an execution fault.

12. Binary code of a secure function executable by a microprocessor for implementing an executing method according to any one of the preceding claims, wherein the binary code comprises lines of code, each line of code containing:

- a cryptogram ($CI_j{}^*$, $CD_j{}^*$) of a single instruction executable by the microprocessor or of a single datum to be processed by the microprocessor,
- a message authentication code ($MAC_j$) allowing the integrity and authenticity of the cryptogram to be verified, and wherein
- the cryptogram contained in the line of code is a cryptogram of a concatenation:

• of said instruction or datum, and
• of a first error-detecting code ($ECC_{Ij}$, $ECC_{Dj}$) allowing an error to be detected in the instruction or in the datum with which it is concatenated.

13. Medium for storing information readable by a microprocessor, **characterized in that** it comprises a binary code according to Claim 12.

14. Microprocessor (2) for implementing a method according to any one of Claims 1 to 11, this microprocessor comprising an arithmetic logic unit (10) and a hardware security module (28), **characterized in that** the hardware security module (28) is configured to execute operations 1), 2) and 3) of the method according to Claim 1.

15. Compiler (300) able to automatically convert a source code of a secure function into a binary code of this secure function, **characterized in that** the compiler is able to automatically convert the source code into a binary code according to Claim 12.

Fig. 1

Fig. 2

Fig. 3

Fig. 4

Fig. 5

Fig. 6

Fig. 7

Fig. 8

Fig. 9

Fig. 10

Fig. 11

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1783648 A1
- US 2009235090 A1
- US 5689727 A1
- WO 2012010205 A1
- EP 1855476 A2
- WO 2007010009 A2
- US 2003046563 A1

**Littérature non-brevet citée dans la description**

- **MENEZES et al.** Handbook of applied cryptography. CRS Press, 01 Octobre 1996